# EUROPEAN PATENT SPECIFICATION

(11) **EP 4 156 768 B1**
(45) Date of publication and mention of the grant of the patent: **21.10.2026**
(21) Application number: 22193958.0
(22) Date of filing: 05.09.2022
(51) Int. Cl.: H04W 28/02, H04W 28/082, H04W 28/08

(54) **METHOD, APPARATUS AND DEVICE FOR NEGOTIATING TRAFFIC-TO-LINK MAPPING CONFIGURATION AND STORAGE MEDIUM**
VERFAHREN, VORRICHTUNG UND VORRICHTUNG ZUR AUSHANDLUNG DER KONFIGURATION VON TRAFFIC-TO-LINK-MAPPING UND SPEICHERMEDIUM
PROCÉDÉ, APPAREIL ET DISPOSITIF DE NÉGOCIATION DE CONFIGURATION DE MAPPAGE TRAFIC-LIAISON ET SUPPORT DE STOCKAGE

(30) Priority: 23.09.2021 CN 202111110603
(43) Date of publication of application: 29.03.2023
(73) Proprietor: Aegis 11 S.A., 2370 Howald (LU)
(72) Inventor: WU, Hao, Sichuan, 610041 (CN); YIN, Lei, Sichuan, 610041 (CN)
(74) Representative: Metroconsult Srl

(56) References cited:
- WO-A1-2021/180541
- US-A1- 2004 008 690
- 802 11 WORKING GROUP OF THE LAN/MAN STANDARDS COMMITTEE OF THE IEEE COMPUTER SOCIETY: "Draft Standard for Information technology- Tele- communications and information exchange between systems Local and metropolitan area networks- Specific requirements ? ? Part 11: Wireless LAN Medium Access Control ? (MAC) and Physical Layer (PHY) Specifications ? ? Amendment 8: Enhancements for extre", vol. 802.11be drafts, no. D1.01, 30 June 2021 (2021-06-30), pages 1 - 679, XP068192080, Retrieved from the Internet <URL:https://grouper.ieee.org/groups/802/11/private/Draft_Standards/11be/Draft%20P802.11be_D1.01_redline_compared_to_D1.0.pdf> [retrieved on 20210630]

## Description

### Technical Field

The embodiments of the disclosure relates to the field of wireless communication, and in particular to a method, apparatus and device for negotiating traffic-to-link mapping configuration and a storage medium.

### Background

In the 802.11 system, an access device (AP STA) and a terminal device (Non-AP STA) are each internally deployed with a media access control (MAC) layer and a physical (PHY) layer, where the MAC layer has main functions of channel management, connection management, quality of service management, power control, time synchronization, etc., and the PHY layer has main functions of modulation, coding, transmission, etc.

The MAC layer and the PHY layer each conceptually include management entities called as an MAC sublayer management entity (MLME) and a PHY sublayer management entity (PLME) respectively, and these entities provide lower-layer management traffic interfaces, through which lower-layer management functions may be invoked.

In order to provide correct MAC operation, each device (including the Non-AP STA and AP STA) has a higher-layer management entity, for example, a station management entity (SME), which instructs the higher-layer management entity above the MAC layer and is a layer-independent entity located in a separate management plane.

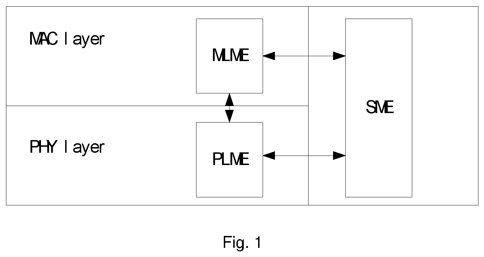

The SME has the functions of collecting layer-related statuses from various layer management entities (MLME and PLME) generally, and further can set layer-specific parameter values similarly. The SME generally performs such functions on behalf of a common system management entity. The layers interact with each other by means of defined primitives. Fig. 1 describes relations between management entities.

The 802.11be network, also called as an extremely high throughput (EHT) network, enhances functions by means of a series of system characteristics and multiple mechanisms to achieve extremely high throughput. As the use of a wireless local area network (WLAN) continues growing, it is increasingly important to provide wireless data services in numerous environments (for example, homes, enterprises, and hotspots). In particular, video traffic still will be the dominant traffic type in numerous WLAN deployments. 4k and 8k videos (at an uncompressed rate of 20 Gbps) emerge, resulting in growing throughput requirements. Novel high-throughput and low-latency applications such as virtual reality or augmented reality, gaming, remote office, and cloud computing will proliferate (e.g., latency below 5 milliseconds for real-time games).

In view of the high throughput and stringent real-time latency requirements of these applications, users desire higher throughput, higher reliability, less latency and jitter, and higher power efficiency when the applications are supported by means of the WLAN. Users desire to improve integration with time-sensitive networks (TSN) to support applications on heterogeneous Ethernet and wireless LANs. The 802.11be network aims to ensure the competitiveness of the WLAN by further improving the overall throughput and reducing latency, while ensuring backward compatibility and coexistence with old technology standards. 802.11 running at frequency bands of 2.4 GHz, 5 GHz and 6 GHz is compatible with the devices.

### Summary

After a multi-link technology is introduced, a device capable of operating on multiple links simultaneously is called a multi-link device, and the multi-link devices may be connected on the multiple links, such that transmitting traffic data may be more flexibly configured relative to a single link. In view of this, embodiments of the disclosure provide a method, apparatus and device for negotiating traffic-to-link mapping configuration and a storage medium, such that traffic-to-link flexible matching may be negotiated between the multi-link devices.

In a first aspect, an embodiment of the disclosure provides a method for negotiating traffic-to-link mapping configuration, applied to a multi-link device, the multi-link device includes a higher-layer management entity and a lower-layer management entity. The method includes:
sending, by the higher-layer management entity, a first traffic-to-link mapping request primitive to the lower-layer management entity, where the first traffic-to-link mapping request primitive includes an address of a peer device, a negotiation session identifier and traffic-to-link mapping configuration information, and the peer device is a multi-link device;
sending, by the lower-layer management entity, a first traffic-to-link mapping request message to the peer device, where the first traffic-to-link mapping request message includes a type of the message, a negotiation session identifier, traffic-to-link mapping configuration information and an instruction whether to use default configuration, and setting the first traffic-to-link mapping request message according to the first traffic-to-link mapping request primitive;
receiving, by the lower-layer management entity, a traffic-to-link mapping response message from the peer device, where the traffic-to-link mapping response message includes a type of the message, a negotiation session identifier and a processing status for a request; and
sending, by the lower-layer management entity, a traffic-to-link mapping confirm primitive to the higher-layer management entity, where the traffic-to-link mapping confirm primitive includes an address of the peer device, a negotiation session identifier and a processing status for a request, and setting the traffic-to-link mapping confirm primitive according to a received traffic-to-link mapping response message.

In an alternative embodiment, the sending, by the lower-layer management entity, a first traffic-to-link mapping request message to the peer device includes:
with the address of the peer device in the first traffic-to-link mapping request primitive being an address of the multi-link device, sending the first traffic-to-link mapping request message to the peer device on any link;
alternatively, with the address of the peer device in the first traffic-to-link mapping request primitive being an address of a logical entity belonging to the multi-link device, sending the first traffic-to-link mapping request message to the peer device on a link corresponding to the logical entity.

In an alternative embodiment, the traffic-to-link mapping response message and the traffic-to-link mapping confirm primitive each further include traffic-to-link mapping configuration information, and the traffic-to-link mapping response message further includes an instruction whether to use default configuration under the condition that the processing status for the request indicates acceptance of the request or suggestion.

In an alternative embodiment, the method further includes:
carrying out, by the higher-layer management entity, traffic-to-link mapping configuration according to the traffic-to-link mapping confirm primitive under the condition that the processing status for the request in the traffic-to-link mapping confirm primitive indicates acceptance of the request; and
not changing, by the higher-layer management entity, current traffic-to-link mapping configuration or setting, by the higher-layer management entity, the current traffic-to-link mapping configuration as default configuration under the condition that the processing status for the request in the traffic-to-link mapping confirm primitive indicates refuse of the request.

In an alternative embodiment, the method further includes:
determining, by the higher-layer management entity, whether to accept suggested configuration parameters according to self-traffic conditions, or/and self-capability, or/and operation limitation under the condition that the processing status for request in the traffic-to-link mapping confirm primitive indicates suggestion, carrying out traffic-to-link mapping configuration according to suggested parameters under the condition that the suggested configuration parameters are accepted, and not changing current traffic-to-link mapping configuration or setting the current traffic-to-link mapping configuration as default configuration under the condition that the suggested configuration parameters are not accepted.

In an alternative embodiment, the method further includes:
sending, by the higher-layer management entity, a traffic-to-link mapping termination request primitive or a second traffic-to-link mapping request primitive to the lower-layer management entity, so as to instruct the lower-layer management entity to send a traffic-to-link mapping termination message or a second traffic-to-link mapping request message to ask the peer device to terminate use of current traffic-to-link mapping configuration; and
sending, by the lower-layer management entity, the second traffic-to-link mapping request message or the traffic-to-link mapping termination message to the peer device, so as to instruct the peer device to terminate use of the current traffic-to-link mapping configuration, and setting the second traffic-to-link mapping request message or the traffic-to-link mapping termination message according to the traffic-to-link mapping termination request primitive or the second traffic-to-link mapping request primitive.

In an alternative embodiment, the traffic-to-link mapping termination request primitive includes an address of the peer device; the second traffic-to-link mapping request primitive includes an address of the peer device and an instruction to use default configuration; and the second traffic-to-link mapping request message includes a type of the message and an instruction whether to use default configuration.

In an alternative embodiment, the sending, by the lower-layer management entity, the second traffic-to-link mapping request message or the traffic-to-link mapping termination message to the peer device includes:
with an address of the peer device in the traffic-to-link mapping termination request primitive or the second traffic-to-link mapping request primitive being an address of a multi-link device, sending the second traffic-to-link mapping request message or the traffic-to-link mapping termination message to the peer device on any link;
alternatively, with the address of the peer device in the traffic-to-link mapping termination request primitive or the second traffic-to-link mapping request primitive being an address of a logical entity belonging to the multi-link device, sending the second traffic-to-link mapping request message or the traffic-to-link mapping termination message to the peer device on a link corresponding to the logical entity.

In an alternative embodiment, the setting the first traffic-to-link mapping request message according to the first traffic-to-link mapping request primitive includes:
setting the instruction whether to use default configuration in the first traffic-to-link mapping request message as an instruction not to use default configuration according to a type of the first traffic-to-link mapping request primitive or the traffic-to-link mapping configuration information included in the first traffic-to-link mapping request primitive.

In an alternative embodiment, the setting the second traffic-to-link mapping request message according to the traffic-to-link mapping termination request primitive or the second traffic-to-link mapping request primitive includes:
setting an instruction whether to use default configuration in the second traffic-to-link mapping request message as an instruction to use default configuration according to a type of the traffic-to-link mapping termination request primitive or the second traffic-to-link mapping request primitive, or according to an instruction whether to use default configuration in the second traffic-to-link mapping request primitive.

In an alternative embodiment, the first traffic-to-link mapping request primitive further includes an instruction not to use default configuration, and the traffic-to-link mapping confirm primitive further includes an instruction whether to use default configuration.

In an alternative embodiment, the traffic-to-link mapping configuration information includes a first parameter, a second parameter, and one or more third parameters, the first parameter being used for indicating that traffics match links for uplink, or downlink, or uplink and downlink, the second parameter being used for indicating which traffics are to be configured, and the third parameter being used for indicating links matching traffics which are to be configured as indicated by the second parameter.

In a second aspect, an embodiment of the disclosure provides a method for negotiating traffic-to-link mapping configuration, applied to a multi-link device, the multi-link device including a higher-layer management entity and a lower-layer management entity. The method includes:
receiving, by the lower-layer management entity, a first traffic-to-link mapping request message from a peer device, where the first traffic-to-link mapping request message includes a type of the message, a negotiation session identifier, traffic-to-link mapping configuration information, and an instruction whether to use default configuration, and the peer device is a multi-link device;
sending, by the lower-layer management entity, a first traffic-to-link mapping indication primitive to the higher-layer management entity, where the first traffic-to-link mapping indication primitive includes an address of the peer device, a negotiation session identifier, and traffic-to-link mapping configuration information, and setting the first traffic-to-link mapping indication primitive according to the first traffic-to-link mapping request message;
sending, by the higher-layer management entity, a traffic-to-link mapping response primitive to the lower-layer management entity, where the traffic-to-link mapping response primitive includes an address of the peer device, a negotiation session identifier and a processing status for a request, and setting the traffic-to-link mapping response primitive according to the first traffic-to-link mapping indication primitive; and

Sending,by the lower-layer management entity, a traffic-to-link mapping response message to the peer device, where the traffic-to-link mapping response message includes a type of the message, a negotiation session identifier and a processing status for a request, and setting the traffic-to-link mapping response message according to the traffic-to-link mapping response primitive.

In an alternative embodiment, the sending, by the lower-layer management entity, a traffic-to-link mapping response message to the peer device includes:
with the address of the peer device in the traffic-to-link mapping response primitive being an address of the multi-link device, sending the traffic-to-link mapping response message to the peer device on any link;
alternatively, with the address of the peer device in the traffic-to-link mapping response primitive being an address of a logical entity belonging to the multi-link device, sending the traffic-to-link mapping response message to the peer device on a link corresponding to the logical entity.

In an alternative embodiment, under the condition that the processing status for the request indicates acceptance of the request or suggestion, the traffic-to-link mapping response primitive and the traffic-to-link mapping response message each further include traffic-to-link mapping configuration information, and the traffic-to-link mapping response message further includes an instruction whether to use default configuration.

In an alternative embodiment, the method further includes:
receiving, by the lower-layer management entity, a second traffic-to-link mapping request message or a traffic-to-link mapping termination message from the peer device, where the second traffic-to-link mapping request message or the traffic-to-link mapping termination message is used for asking to terminate use of current traffic-to-link mapping configuration;
sending, by the lower-layer management entity, a traffic-to-link mapping termination indication primitive or a second traffic-to-link mapping indication primitive to the higher-layer management entity, so as to instruct the higher-layer management entity to terminate use of the current traffic-to-link mapping configuration, and setting the traffic-to-link mapping termination indication primitive or the second traffic-to-link mapping indication primitive according to the second traffic-to-link mapping request message or the traffic-to-link mapping termination message; and

Setting, by the higher-layer management entity, the traffic-to-link mapping configuration as default configuration.

In an alternative embodiment, the second traffic-to-link mapping request message includes a type of the message and an instruction to use default configuration; the traffic-to-link mapping termination indication primitive includes an address of the peer device; and the second traffic-to-link mapping indication primitive includes an address of the peer device and an instruction whether to use default configuration.

In an alternative embodiment, the setting the traffic-to-link mapping response message according to the traffic-to-link mapping response primitive includes:
Setting an instruction whether to use default configuration in the traffic-to-link mapping response message as an instruction not to use default configuration according to a type of the traffic-to-link mapping response primitive or the traffic-to-link mapping configuration information included in the traffic-to-link mapping response primitive.

In an alternative embodiment, the setting the second traffic-to-link mapping indication primitive according to the second traffic-to-link mapping request message or the traffic-to-link mapping termination message includes:
Setting the instruction whether to use default configuration in the second traffic-to-link mapping indication primitive as an instruction to use default configuration according to a type of the second traffic-to-link mapping request message or the traffic-to-link mapping termination message, or according to the instruction to use default configuration in the second traffic-to-link mapping request message.

In an alternative embodiment, the first traffic-to-link mapping indication primitive further includes an instruction whether to use default configuration, and the traffic-to-link mapping response primitive further includes an instruction whether to use default configuration.

In an alternative embodiment, the traffic-to-link mapping configuration information includes a first parameter, a second parameter, and one or more third parameters, the first parameter being used for indicating that traffics match links for uplink, or downlink, or uplink and downlink, the second parameter being used for indicating which traffics are to be configured, and the third parameter being used for indicating links matching traffics which are to be configured as indicated by the second parameter.

In a third aspect, an embodiment of the disclosure provides an apparatus for negotiating traffic-to-link mapping configuration, applied to a multi-link device, the multi-link device including a higher-layer management entity and a lower-layer management entity. The apparatus includes a negotiation module, where the negotiation module is used for executing:
sending, by the higher-layer management entity, a first traffic-to-link mapping request primitive to the lower-layer management entity, where the first traffic-to-link mapping request primitive includes an address of a peer device, a negotiation session identifier and traffic-to-link mapping configuration information, and the peer device is a multi-link device;
sending, by the lower-layer management entity, a first traffic-to-link mapping request message to the peer device, where the first traffic-to-link mapping request message includes a type of the message, a negotiation session identifier, traffic-to-link mapping configuration information and an instruction whether to use default configuration, and setting the first traffic-to-link mapping request message according to the first traffic-to-link mapping request primitive;
receiving, by the lower-layer management entity, a traffic-to-link mapping response message from the peer device, where the traffic-to-link mapping response message includes a type of the message, a negotiation session identifier and a processing status for a request; and
sending, by the lower-layer management entity, a traffic-to-link mapping confirm primitive to the higher-layer management entity, where the traffic-to-link mapping confirm primitive includes an address of the peer device, a negotiation session identifier and a processing status for a request, and setting the traffic-to-link mapping confirm primitive according to a received traffic-to-link mapping response message.

In an alternative embodiment, the traffic-to-link mapping response message and the traffic-to-link mapping confirm primitive each further include traffic-to-link mapping configuration information, and the traffic-to-link mapping response message further includes an instruction whether to use default configuration under the condition that the processing status for the request indicates acceptance of the request or suggestion.

In an alternative embodiment, the negotiation module is further used for executing:
sending, by the higher-layer management entity, a traffic-to-link mapping termination request primitive or a second traffic-to-link mapping request primitive to the lower-layer management entity, so as to instruct the lower-layer management entity to send a traffic-to-link mapping termination message or a second traffic-to-link mapping request message to ask the peer device to terminate use of current traffic-to-link mapping configuration; and
sending, by the lower-layer management entity, the second traffic-to-link mapping request message or the traffic-to-link mapping termination message to the peer device, so as to instruct the peer device to terminate use of the current traffic-to-link mapping configuration, and setting the second traffic-to-link mapping request message or the traffic-to-link mapping termination message according to the traffic-to-link mapping termination request primitive or the second traffic-to-link mapping request primitive.

In an alternative embodiment, the traffic-to-link mapping termination request primitive includes an address of the peer device; the second traffic-to-link mapping request primitive includes an address of the peer device and an instruction to use default configuration; and the second traffic-to-link mapping request message includes a type of the message and an instruction whether to use default configuration.

In an alternative embodiment, the setting the first traffic-to-link mapping request message according to the first traffic-to-link mapping request primitive includes:
setting the instruction whether to use default configuration in the first traffic-to-link mapping request message as an instruction not to use default configuration according to a type of the first traffic-to-link mapping request primitive or the traffic-to-link mapping configuration information included in the first traffic-to-link mapping request primitive.

In an alternative embodiment, the setting the second traffic-to-link mapping request message according to the traffic-to-link mapping termination request primitive or the second traffic-to-link mapping request primitive includes:
setting an instruction whether to use default configuration in the second traffic-to-link mapping request message as an instruction to use default configuration according to a type of the traffic-to-link mapping termination request primitive or the second traffic-to-link mapping request primitive, or according to an instruction whether to use default configuration in the second traffic-to-link mapping request primitive.

In an alternative embodiment, the first traffic-to-link mapping request primitive further includes an instruction not to use default configuration, and the traffic-to-link mapping confirm primitive further includes an instruction whether to use default configuration.

In a fourth unclaimed aspect, an embodiment of the disclosure provides an apparatus for negotiating traffic-to-link mapping configuration, applied to a multi-link device, the multi-link device including a higher-layer management entity and a lower-layer management entity. The apparatus includes a negotiation module, where the negotiation module is used for executing:
receiving, by the lower-layer management entity, a first traffic-to-link mapping request message from a peer device, where the first traffic-to-link mapping request message includes a type of the message, a negotiation session identifier, traffic-to-link mapping configuration information, and an instruction whether to use default configuration, and the peer device is a multi-link device;
sending, by the lower-layer management entity, a first traffic-to-link mapping indication primitive to the higher-layer management entity, where the first traffic-to-link mapping indication primitive includes an address of the peer device, a negotiation session identifier, and traffic-to-link mapping configuration information, and setting the first traffic-to-link mapping indication primitive according to the first traffic-to-link mapping request message;
sending, by the higher-layer management entity, a traffic-to-link mapping response primitive to the lower-layer management entity, where the traffic-to-link mapping response primitive includes an address of the peer device, a negotiation session identifier and a processing status for a request, and setting the traffic-to-link mapping response primitive according to the first traffic-to-link mapping indication primitive; and
sending, by the lower-layer management entity, a traffic-to-link mapping response message to the peer device, where the traffic-to-link mapping response message includes a type of the message, a negotiation session identifier and a processing status for a request, and setting the traffic-to-link mapping response message according to the traffic-to-link mapping response primitive.

In an alternative embodiment, under the condition that the processing status for the request indicates acceptance of the request or suggestion, the traffic-to-link mapping response primitive and the traffic-to-link mapping response message each further include traffic-to-link mapping configuration information, and the traffic-to-link mapping response message further includes an instruction whether to use default configuration.

In an alternative embodiment, the negotiation module is further used for executing:
receiving, by the lower-layer management entity, a second traffic-to-link mapping request message or a traffic-to-link mapping termination message from the peer device, where the second traffic-to-link mapping request message or the traffic-to-link mapping termination message is used for asking to terminate use of current traffic-to-link mapping configuration;
sending, by the lower-layer management entity, a traffic-to-link mapping termination indication primitive or a second traffic-to-link mapping indication primitive to the higher-layer management entity, so as to instruct the higher-layer management entity to terminate use of the current traffic-to-link mapping configuration, and setting the traffic-to-link mapping termination indication primitive or the second traffic-to-link mapping indication primitive according to the second traffic-to-link mapping request message or the traffic-to-link mapping termination message; and
setting, by the higher-layer management entity, the traffic-to-link mapping configuration as default configuration.

In an alternative embodiment, the second traffic-to-link mapping request message includes a type of the message and an instruction to use default configuration; the traffic-to-link mapping termination indication primitive includes an address of the peer device; and the second traffic-to-link mapping indication primitive includes an address of the peer device and an instruction whether to use default configuration.

In an alternative embodiment, the setting the traffic-to-link mapping response message according to the traffic-to-link mapping response primitive includes:
setting an instruction whether to use default configuration in the traffic-to-link mapping response message as an instruction not to use default configuration according to a type of the traffic-to-link mapping response primitive or the traffic-to-link mapping configuration information included in the traffic-to-link mapping response primitive.

In an alternative embodiment, the setting the second traffic-to-link mapping indication primitive according to the second traffic-to-link mapping request message or the traffic-to-link mapping termination message includes:
setting the instruction whether to use default configuration in the second traffic-to-link mapping indication primitive as an instruction to use default configuration according to a type of the second traffic-to-link mapping request message or the traffic-to-link mapping termination message, or according to the instruction to use default configuration in the second traffic-to-link mapping request message.

In an alternative embodiment, the first traffic-to-link mapping indication primitive further includes an instruction whether to use default configuration, and the traffic-to-link mapping response primitive further includes an instruction whether to use default configuration.

In a fifth aspect, an embodiment of the disclosure provides a device for negotiating traffic-to-link mapping configuration. The device includes a processor and a memory, where the memory stores a command executable by the processor, and the command is loaded and executed by the processor to implement the method for negotiating traffic-to-link mapping configuration of the first aspect or the second aspect.

In a sixth unclaimed aspect, an embodiment of the disclosure provides a computer-readable storage medium, storing a computer program, where the computer program implements the method for negotiating traffic-to-link mapping configuration of the first aspect or the second aspect when executed by a processor

In a seventh unclaimed
aspect, an embodiment of the disclosure provides a computer program product including a command, where the at least one processor executes the method for negotiating traffic-to-link mapping configuration of the first aspect or the second aspect when the command is executed by at least one processor.

It is noted that the apparatus in the third aspect is used for executing the method provided in the first aspect, the apparatus in the fourth aspect is used for executing the method in the second aspect, the device in the fifth aspect, the storage medium in the sixth aspect and the computer program product in the seventh aspect are used for executing the method in the first aspect or the second aspect, which accordingly, may have the same beneficial effects as the method in the first aspect or the second aspect, which are not described in embodiments of the disclosure.

The disclosure negotiates traffic-to-link flexible matching between multi-link devices, such that the multi-link devices dynamically set traffic types of data sent on different links according to actual traffic requirements or factors of network loads, etc., for example, data of different traffic types may be transmitted on different links, or the same data may be transmitted on all links, thereby improving an effective transmission rate of each traffic on the multi-link devices, and improving use efficiency of network resources.

The invention is set-out in the appended claims.

### Brief Description of the Drawings

Fig. 1 is a schematic diagram of a relation between management entities in a device in the prior art;
Fig. 2 is a schematic diagram of a method for negotiating traffic-to-link mapping configuration provided in an embodiment of the disclosure;
Fig. 3 is a structural schematic diagram of an apparatus for negotiating traffic-to-link mapping configuration provided in an embodiment of the disclosure;
Fig. 4 is a structural schematic diagram of another apparatus for negotiating traffic-to-link mapping configuration provided in an embodiment of the disclosure; and
Fig. 5 is a structural schematic diagram of a device for negotiating traffic-to-link mapping configuration provided in an embodiment of the disclosure.

### Detailed Description of the Embodiments

In order to make those skilled in the art better understand the technical solution of the disclosure, the technical solutions of the embodiments of the disclosure will be described below clearly and comprehensively. Apparently, the embodiments described are merely some of, rather than all of, the embodiments of the disclosure. It should be understood that the specific embodiments described herein are merely illustrative of the disclosure and are not intended to limit the disclosure. Although the contents disclosed in the disclosure are introduced according to one or several exemplary examples, it should be understood that all aspects of these contents disclosed may also constitute a complete technical solution separately. The following embodiments and the features of the embodiments may be combined with each other without conflict.

In the disclosure, "at least one" refers to one or more, and "plurality" refers to two or more. "And/or" describes an associated relation of an associated object, and indicates that three relations may exist. For example, A and/or B may indicate that A exists separately, A and B exist at the same time, and B exists separately, where A and B may be singular or plural. The character "/" generally indicates that a contextual object is an "or" relation. Similar words of "comprise", "include", etc. mean that elements or items appearing before the word encompass elements or items listed after the word without excluding other elements or items. "At least one of the following", etc. refers to any combination of these items, including any combination of a single item or a plurality of items. For example, at least one of a, b, and c may mean that a, b, c, a and b, a and c, b and c, or a, b and c, where a, b, and c may be single or plural. In addition, in order to conveniently and clearly describe the technical solutions of the embodiments of the disclosure, in the embodiments of the disclosure, the words "first", "second", etc. are used to distinguish the same or similar items having substantially the same function and effect, and those skilled in the art will understand that the words "first", "second", etc. do not limit the number and order of execution. For example, "first" in a first trigger message and "second" in a second trigger message in the embodiments of the disclosure are only used to distinguish different trigger messages. The descriptions of first, second, etc. appearing in the embodiments of the disclosure are merely intended to be illustrative and to distinguish objects of the description, are not sequential, do not indicate a particular limitation on the number of devices in the embodiments of the disclosure, and do not constitute any limitation on the embodiments of the disclosure.

In the disclosure, the words "exemplary", "for example", etc. are used to mean serving as an example, instance, or illustration. Any embodiment or design solution described as "exemplary" or "for example" in the disclosure
should not to be construed as being preferred or advantageous over other embodiments or design solutions. More exactly, use of the words "exemplary", "for example", etc. is intended to present related concepts in a specific way.

It should be noted that a multi-link device includes a plurality of logical entities, where each logical entity transmits data by means of a link, and each logical entity includes an independent data receiving and transmitting module. A single-link device only has one logical entity and only one media access control address (MAC) address, and the multi-link device has one MAC address, and each logical entity belonging to the multi-link device has one MAC address. For example, one multi-link device runs with three logical entities, such that there are four MAC addresses on the physical device, one address is an address of the multi-link device, and each of the three logical entities has a MAC address. In the embodiments of the disclosure, for the multi-link device, the address of the device may be the address of the multi-link device and may also be the addresses of the logical entities belonging to the multi-link device.

In the embodiments of the disclosure, it is assumed that multi-link devices MLD1 and MLD2 are connected to each other, the MLD1 has two logical entities STA1 and STA2, and the MLD2 has two logical entities STA3 and STA4, where the STA1 and the STA3 establish a connection on a link link1, and the STA2 and the STA4 establish a connection on a link link2; and it is assumed that when a connection is initially established, data transmission of all traffic types may be supported on both the link1 and the link2 according to default configuration. The embodiments of the disclosure use a traffic identification (TID) to indicate types of traffics, and take a lower-layer management entity as an MAC sublayer management entity (MLME) and a higher-layer management entity as a station management entity (SME) as an example. The embodiments of the disclosure are illustrated with the two logical entities in the multi-link device as an example, but the embodiments of the disclosure are not limited to the two logical entities, and operations of more logical entities in the multi-link device are similar to that of the two logical entities, which is not described in the embodiments of the disclosure.

The MLD1 and the MLD2 may exchange capability information in processes of connection, etc., if the MLD1 and the MLD2 both support traffic-to-link mapping configuration, the MLD1 or the MLD2 may need to divide transmission of traffic data according to factors of a size of current traffic data volume, a load of each link, signal strength or quality of each link, a maximum transmission rate supported by links, etc. For example, in order to guarantee fluency of an online video, a transmission rate of traffic data needs to be improved and transmission delay needs to be reduced, one link is used for specially downloading a video stream, other Internet surfing data is transmitted by another link, and therefore, matching of the links and traffic identifications needs to be reset.

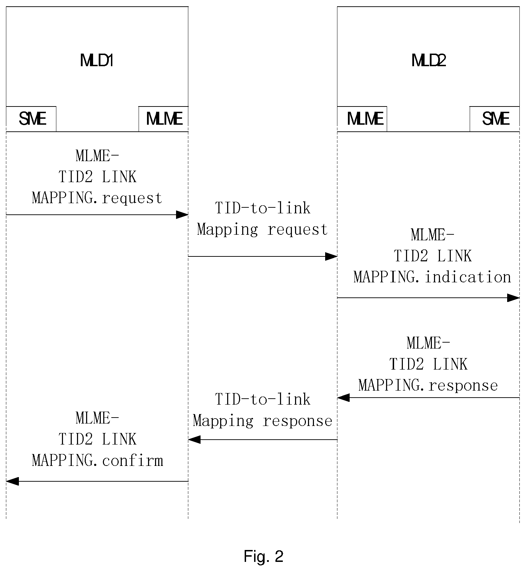

Fig. 2 is a schematic diagram of a method for negotiating traffic-to-link mapping configuration provided in an embodiment of the disclosure. As shown in Fig. 2, the method for negotiating traffic-to-link mapping configuration includes:
S101, send, by an SME of an MLD1, a traffic-to-link mapping request primitive (e.g., an MLME-TID2LINKMAPPING. request primitive) to an MLME of an MLD1, where the MLME-TID2LINKMAPPING. request primitive includes an address of a peer device, a negotiation session identifier and traffic-to-link mapping configuration information. Optionally, the traffic-to-link mapping configuration information includes a first parameter, a second parameter, and one or more third parameters, where the first parameter is used for indicating that traffics match links for uplink, or downlink, or uplink and downlink, the second parameter is used for indicating which traffics are to be configured, and the third parameter is used for indicating links matching traffics which are to be configured as indicated by the second parameter. Exemplarily, the MLME-TID2LINKMAPPING.request primitive includes the following parameters:
PeerSTAAddress, an address used for indicating the peer device executing TID-to-link matching negotiation, specifically an address of a device receiving a TID-to-link mapping request message in the embodiment of the disclosure, an address of an MLD2 or an address of a logical entity STA3 or STA4 belonging to the MLD2 being set in the embodiment of the disclosure;
Dialog Token used for identifying a TID-to-link matching negotiation process this time;
Direction used for indicating that the TID matches the link for uplink, or downlink, or uplink and downlink;
Link mapping presence bitmap used for indicating which TIDs are to be configured, where for example, a value range of the TID is 0-7, and the parameter has 8 bits, such that 00001111 instructs that TID values of 0, 1, 2, and 3 are configured in the following parameter Link mapping of TID i; and
Link mapping of TID i, link information matching traffics with a TID value of i (a value range of i is a value range of the TID, and if Link mapping presence bitmap indicates that traffics with TID values of 0, 1, 2, and 3 need to be configured, the values of i are 0, 1, 2 and 3, and there are 4 parameters), where for example, if there are two links in the embodiment of the disclosure, the parameter has two bits, and 01 indicates that traffics with the TID=i are transmitted on a link1 and are not transmitted on a link2; 10 indicates that traffics with TID=i are transmitted on the link2 and are not transmitted on the link1; and 11 indicates that traffics with TID=i are transmitted on both the link1 and the link2.

S102, receive, by the MLME of the MLD1, the MLME-TID2LINKMAPPING.request primitive, and then set, by the MLME of the MLD1, a traffic-to-link Mapping request message (e.g., a TID-to-link Mapping request message), where the TID-to-link Mapping request message includes a type of the message, a negotiation session identifier, traffic-to-link mapping configuration information, and an instruction whether to use default configuration. Exemplarily, the TID-to-link Mapping request message includes the following parameters:
Frame type, a type of message, where "TID-to-link Mapping request" is set in the embodiment of the disclosure;
Dialog Token, which is used for identifying a TID-to-link matching negotiation process this time, and is the same as the MLME-
TID2LINKMAPPING.request primitive;
Direction, which is used for indicating that the TID matches the link for uplink, or downlink, or uplink and downlink, and is the same as in the MLME-TID2LINKMAPPING.request primitive;
Link mapping presence bitmap, which is used for indicating which TIDs are to be configured, and is the same as in the primitive MLME-TID2LINKMAPPING. request;
Link mapping of TID i, link information matching traffics with a TID value of i (a value range of i is a value range of the TID), which is the same as in the MLME-TID2LINKMAPPING.request primitive; and
Default link mapping, which is used for indicating whether to use default configuration, and may be set according to a type of the MLME-TID2LINKMAPPING.request primitive or parameters of the primitive (e.g., whether traffic-to-link mapping configuration information is included). For example, the primitive in the embodiment of the disclosure indicates negotiation of a specified traffic-to-link mapping configuration, and therefore, a parameter value is set as 0, indicating not to use default configuration.

S103, send, by the MLME of MLD1, a TID-to-link Mapping request message to an MLME of an MLD2.
1) If the PeerSTAAddress in the MLME-TID2LINKMAPPING.request primitive is set to an address of the STA3, a TID-to-link Mapping request message is sent on the link1 to the MLME of the MLD2.
2) If the PeerSTAAddress in the MLME-TID2LINKMAPPING.request primitive is set to an address of the STA4, the TID-to-link Mapping request message is sent on the link2 to the MLME of the MLD2.
3) If the PeerSTAAddress in the MLME-TID2LINKMAPPING.request primitive is set to an address of the MLD2, the TID-to-link Mapping request message is sent on the link1 or the link2 to the MLME of the MLD2.

S104, receive, by the MLME of the MLD2, the TID-to-link Mapping request message, and then send, by the MLME of the MLD2, the traffic-to-link mapping request primitive (e.g., an MLME-TID2LINKMAPPING.indication primitive) to the SME of the MLD2, where the MLME-TID2LINKMAPPING.indication primitive includes an address of the peer device, a negotiation session identifier, and traffic-to-link mapping configuration information. Exemplarily, the MLME-TID2LINKMAPPING.indication primitive includes the following parameters:
PeerSTAAddress, an address used for indicating the peer device executing TID-to-link matching negotiation, specifically an address of a device sending a TID-to-link mapping request message in the embodiment of the disclosure, the address of the MLD1 or the address of the logical entity STA1 or STA2 belonging to the MLD1 being set in the embodiment of the disclosure;
Dialog Token, which is used for identifying a TID-to-link matching negotiation process this time, and is the same as in the TID-to-link Mapping request message;
Direction, which is used for indicating that the TID matches the link for uplink, or downlink, or uplink and downlink, and is the same as in the TID-to-link Mapping request message;
Link mapping presence bitmap, which is used for indicating which TIDs are to be configured, and is the same as in the TID-to-link Mapping request message; and
Link mapping of TID i: link information matching traffics with a TID value of i (i is a value range of the TID), which is the same as in the TID-to-link Mapping request message.

S105, receive, by the SME of the MLD2, the MLME-TID2LINKMAPPING.indication primitive, then set, by the SME of the MLD2, a traffic-to-link mapping response primitive (e.g., an MLME-TID2LINKMAPPING.response primitive) according to the MLME-TID2LINKMAPPING. **indi cation** primitive, and send, by the SME of the MLD2, the MLME-TID2LINKMAPPING.response primitive to the MLME of the MLD2, where the MLME-TID2LINKMAPPING.response primitive includes an address of the peer device, a negotiation session identifier, and a processing status for a request.

5.1 If configuration instructed in the MLME-TID2LINKMAPPING.indication primitive is agreed, a value of a parameter Status code is set to SUCCESS, indicating acceptance of the request, and the MLME-TID2LINKMAPPING.response primitive is sent to the MLME of the MLD2, where the MLME-TID2LINKMAPPING.response primitive includes the following parameters:
PeerSTAAddress, an address used for indicating the peer device executing the TID-to-link matching negotiation, specifically an address of a device receiving a TID-to-link Mapping response message in the embodiment of the disclosure, the address of the MLD1 or the address of the logical entity STA1 or STA2 belonging to the MLD1 being set in the embodiment of the disclosure;
Dialog Token, which is used for identifying TID-to-link matching negotiation process this time, and is the same as in the TID-to-link Mapping request message;
Status code, the processing status for the request, where SUCCESS is set in the embodiment of the disclosure;
Direction used for indicating that the TID matches the link for uplink, or downlink, or uplink and downlink, where a value accepted by the MLD2 is set in the embodiment of the disclosure;
Link mapping presence bitmap used for indicating which TIDs to be configured, where a value accepted by the MLD2 is set in the embodiment of the disclosure; and
Link mapping of TID i, link information matching traffics with a TID value of i (a value range of i is the value range of the TID), where a value accepted by the MLD2 is set in the embodiment of the disclosure.

5.2 If configuration instructed in the MLME-TID2LINKMAPPING.indication primitive is not agreed, configuration may be set according to one of the following manners:
1) set a value of the parameter Status code as Refused, indicating refuse of the request, and send the MLME-TID2LINKMAPPING.response primitive to the MLME of the MLD2, where the MLME-TID2LINKMAPPING.response primitive includes the following parameters:
   PeerSTAAddress, an address used for indicating the peer device executing the TID-to-link matching negotiation, specifically an address of a device receiving a TID-to-link Mapping response message in the embodiment of the disclosure, the address of the MLD1 or the address of the logical entity STA1 or STA2 belonging to the MLD1 being set in the embodiment of the disclosure;
   Dialog Token, which is used for identifying the TID-to-link matching negotiation process this time, and is the same as in the TID-to-link Mapping request message; and
   Status code: a processing status for the request, where Refused is set in the embodiment of the disclosure.
2) Set a value of the parameter Status code as Suggested, indicating suggestion, and send the MLME-TID2LINKMAPPING.response primitive to the MLME of the MLD2, where the MLME-TID2LINKMAPPING.response primitive includes the following parameters:
   PeerSTAAddress, an address used for indicating the peer device executing the TID-to-link matching negotiation, specifically an address of a device receiving a TID-to-link Mapping response message in the embodiment of the disclosure, the address of the MLD1 or the address of the logical entity STA1 or STA2 belonging to the MLD1 being set in the embodiment of the disclosure;
   Dialog Token, which is used for identifying a TID-to-link matching negotiation process this time, and is the same as in the TID-to-link Mapping request message;
   Status code: a processing status for the request, where Suggested is set in the embodiment of the disclosure;
   Direction used for indicating that the TID matches the link for uplink, or downlink, or uplink and downlink, where a value suggested by the MLD2 is set in the embodiment of the disclosure;
   Link mapping presence bitmap used for indicating which TIDs are to be configured, embodiments of the disclosure set to the value suggested by MLD2; and
   Link mapping of TID i, link information matching traffics with a TID value of i (a value range of i is a value range of the TID), where a value suggested by the MLD2 is set in the embodiment of the disclosure.

S106, set, by the MLME of the MLD2, a traffic-to-link mapping response message (e.g., a TID-to-link Mapping response message) according to the received MLME-TID2LINKMAPPING.response primitive, where the TID-to-link Mapping response message includes a type of the message, a negotiation session identifier, and a processing status for the request. Exemplarily, the TID-to-link Mapping response message includes the following parameters:
Frame type: a type of the message, where "TID-to-link Mapping response" is set in the embodiment of the disclosure;
Dialog Token, which is used for identifying a TID-to-link matching negotiation process this time, and is the same as in the TID-to-link Mapping request message;
Status code, where a processing status for a request is set according to the MLME-TID2LINKMAPPING.response primitive;
Direction used for indicating that the TID matches the link for uplink, or downlink, or uplink and downlink, where when the value of the Status code is Suggested, the value is set as the value suggested by the MLD2; when the value of the Status code is SUCCESS, the value is set as the value accepted by the MLD2; and when the value of the Status code is Refused, the value is not included; and
Link mapping presence bitmap used for indicating which TIDs are to be configured, where when the value of the Status code is Suggested, the value is set as the value suggested by the MLD2; when the value of the Status code is SUCCESS, the value is set as the value accepted by the MLD2; and when the value of the Status code is Refused, the value is not included;
Link mapping of TID i: link information matching traffics with a TID value of i (a value range of i is a value range of the TID), where when the value of the Status code is Suggested, the value is set as the value suggested by the MLD2; when the value of the Status code is SUCCESS, the value is set as the value accepted by the MLD2; and when the value of the Status code is Refused, the value is not included; and
Default link mapping used for indicating whether to use default configuration, where setting is carried out according to the type of the primitive or parameters of the primitive, and when the value of the Status code is Suggested or SUCCESS, for example, the primitive in the embodiment of the disclosure indicates negotiation of specified traffic-to-link mapping configuration, a parameter value is accordingly set as 0, indicating not to use default configuration; and when the Status code is Refused, the value may not be included, or the value is set as 1, indicating to use default configuration.

S107, send, by the MLME of the MLD2, a TID-to-link Mapping response message to the MLME of the MLD1.
1) If PeerSTAAddress in the MLME-TID2LINKMAPPING.response primitive is set as the address of the STA1, the TID-to-link Mapping response message is sent on the link1 to the MLME of the MLD1.
2) If the PeerSTAAddress in the MLME-TID2LINKMAPPING.response primitive is set as the address of the STA2, the TID-to-link Mapping response message is sent on the link2 to the MLME of the MLD1.
3) If the PeerSTAAddress in the MLME-TID2LINKMAPPING.response primitive is set as the address of the MLD1, a TID-to-link Mapping response message is sent on the link1 or the link2 to the MLME of the MLD1.

S108, receive, by the MLME of the MLD1, the TID-to-link Mapping response message, and then send, by the MLME of the MLD1, a traffic-to-link mapping confirm primitive (e.g., an MLME-TID2LINKMAPPING.confirm primitive) to the SME of the MLD1, where the MLME-TID2LINKMAPPING.confirm primitive includes an address of the peer device, a negotiation session identifier, and a processing status for a request. Exemplarily, the MLME-TID2LINKMAPPING.confirm primitive includes the following parameters:
PeerSTAAddress, an address used for indicating the peer device executing the TID-to-link matching negotiation, specifically an address of a device for sending a TID-to-link Mapping response message in the embodiment of the disclosure, the address of the MLD2 or the address of the logical entity STA3 or STA4 belonging to the MLD2 being set in the embodiment of the disclosure;
Dialog Token, which is used for identifying a TID-to-link matching negotiation process this time, and is the same as in the TID-to-link Mapping request message;
Status code, where a processing status for a request is set according to the TID-to-link Mapping response message;
Direction used for indicating that the TID matches the link for uplink, or downlink, or uplink and downlink, where when the value of the Status code is Suggested, the value is set as the value suggested by the MLD2; when the value of the Status code is SUCCESS, the value is set as the value accepted by the MLD2; and when the value of the Status code is Refused, the value is not included;
Link mapping presence bitmap used for indicating which TIDs are to be configured, where when the value of the Status code is Suggested, the value is set as the value suggested by the MLD2; when the value of the Status code is SUCCESS, the value is set as the value accepted by the MLD2; and when the value of the Status code is Refused, the value is not included; and
Link mapping of TID i: link information matching traffics with a TID value of i (a value range of i is a value range of the TID), where when the value of the Status code is Suggested, the value is set as the value suggested by the MLD2; when the value of the Status code is SUCCESS, the value is set as the value accepted by the MLD2; and when the value of the Status code is Refused, the value is not included.

S109, carry out, by the SME of the MLD1, configuration operation according to the received MLME-TID2LINKMAPPING. confirm primitive:
if the value of the Status code is SUCCESS, carry out TID-to-link mapping configuration according to the received parameters;
if the value of the Status code is Refused, not change current TID-to-link mapping configuration, or set the current TID-to-link mapping configuration as default configuration; and
if the value of the Status code is Suggested, determine whether to accept suggested configuration parameters according to a self-traffic condition, or/and self-capability, or/and limitation of operation, if so, carry out TID-to-link mapping configuration according to the suggested parameters, and if not, not change the current TID-to-link mapping configuration or setting the current TID-to-link mapping configuration as default configuration.

S110, send, by the MLD1 and the MLD2, data to an opposite side on corresponding links according to TIDs corresponding to the data and TID-to-link mapping configuration when the data needs to be sent according to the TIDs determined by negotiation and the TID-to-link mapping configuration.

In some embodiments, the MLD1 or the MLD2 may further determine to terminate negotiated configuration, and after the MLD1 and the MLD2 terminate the negotiated configuration, when the MLD1 and the MLD2 have data to send, the data may be sent on any link. It is assumed that the MLD1 determines to terminate the negotiated configuration, terminating the negotiated configuration includes:
S111, send, by the SME of the MLD1, a traffic-to-link mapping termination request primitive (e.g., an MLME-TID2LINKMAPPINGTE RMINATION.request primitive) or a traffic-to-link mapping request primitive (e.g., an MLME-TID2LINKMAPPING.request primitive) to the MLME of the MLD1, instruct the MLME to send a traffic-to-link mapping termination message (e.g., a TID-to-link Mapping termination notification message) or a traffic-to-link mapping request message (e.g., a TID-to-link Mapping request message) to ask the MLD2 to terminate use of the current traffic-to-link mapping configuration. An example is as follows:
1) The SME of the MLD1 sends the MLME-TID2LINKMAPPINGTERMINATIO.request primitive to the
   MLME of the MLD1, where the primitive includes the following parameters:
   PeerSTAAddress, an address used for indicating the peer device executing the TID-to-link matching negotiation, specifically an address of the MLD2 or an address of a logical entity STA3 or STA4 belonging to the MLD2 being set in the embodiment of the disclosure.
2) The SME of the MLD1 sends the MLME-TID2LINKMAPPING.request primitive to the MLME of the MLD1, where the primitive includes the following parameters:
   PeerSTAAddress, an address used for indicating the peer device executing TID-to-link matching negotiation, specifically an address of the MLD2 or the address of the logical entity STA3 or STA4 belonging to the MLD2 being set in the embodiment of the disclosure; and
   Default link mapping used for indicating whether to use default configuration, which is set as 1 in the embodiment of the disclosure, indicating to use default configuration.

S112, set, by the MLME of the MLD1, a traffic-to-link mapping request message (e.g., a TID-to-link Mapping request message) or a traffic-to-link mapping termination message (e.g., a TID-to-link Mapping termination notification message) according to received traffic-to-link mapping termination request primitive (e.g., an MLME-TID2LINKMAPPINGTERMINATION.request primitive) or a traffic-to-link mapping request primitive (e.g., an MLME-TID2LINKMAPPING.request primitive), and send the trafficto-link mapping request message (e.g., a TID-to-link Mapping request message) or the traffic-to-link mapping termination message (e.g. a TID-to-link Mapping termination notification message) to the MLME of the MLD2 to instruct the MLD2 to terminate use of current traffic-to-link mapping configuration. An example is as follows:
S1121, receive, by the MLME of the MLD1, the MLME-TID2LINKMAPPINGTERMINATIO.request primitive, and then set, by the MLME of the MLD1, a TID-to-link Mapping request message, where the message includes the following parameters:
Frame type, a type of message, where "TID-to-link Mapping request" is set in the embodiment of the disclosure; and
Default link mapping used for indicating whether to use default configuration, where setting is carried out according to the type of the primitive or parameters of the primitive, for example, the MLME-TID2LINKMAPPINGTERMINATION.request primitive in the embodiment of the disclosure instructs to terminate negotiation of traffic-to-link mapping configuration, and a parameter value is accordingly set as 1, indicating to use default configuration.

Optionally, the TID-to-link Mapping request message may be other types of message, for example, a TID-to-link Mapping termination notification message, where the message includes the following parameters:
Frame type: a type of the message, where "TID-to-link Ma ping termination notification" is set in the embodiment of the disclosure.

S1122, send, by the MLME of MLD1, a TID-to-link Mapping request message to the MLME of the MLD2.
1) If the PeerSTAAddress in the MLME-TID2LINKMAPPINGTERMINATIO.request primitive is set as the address of the STA3, the TID-to-link Mapping request message is sent on the link1 to the MLME of the MLD2.
2) If the PeerSTAAddress in the MLME-TID2LINKMAPPINGTERMINATIO.request primitive is set as the address of the STA4, the TID-to-link Mapping request message is sent on the link2 to the MLME of the MLD2.
3) If the PeerSTAAddress in the MLME-TID2LINKMAPPINGTERMINATIO.request primitive is set as the address of the MLD2, the TID-to-link Mapping request message is sent on the link1 or the link2 to the MLME of the MLD2.

It should be noted that when the MLME-TID2LINKMAPPINGTERMINATION.request primitive is sent in S111, the TID-to-link Mapping request message or the TID-to-link Mapping termination notification message may be sent in S112, and similarly, when the MLME-TID2LINKMAPPING.request primitive is sent in S111, the TID-to-link Mapping request message or the TID-to-link Mapping termination notification message may be sent in S112, which are not disclosed in the embodiment of the disclosure. The TID-to-link Mapping termination notification message may include a type of the message and a negotiation session identifier, where the type of the message is set as "TID-to-link Mapping termination notification", and the negotiation session identifier is set as a session identifier during negotiation.

S113, send, by the MLME of the MLD2, a traffic-to-link mapping termination indication primitive (e.g., MLME-TID2LINKMAPPINGTERMINATION.indification primitive) or a traffic-to-link mapping indication primitive (e.g., MLME-TID2LINKMAPPING.indication primitive) to the SME of the MLD2 to instruct the SME of the MLD2 to terminate use of current traffic-to-link mapping configuration. An example is as follows:
1) After the MLME of the MLD2 receives the TID-to-link Mapping request message, if the parameter Default link mapping has a value of 1, the MLME-TID2LINKMAPPINGTERMINATION.indication primitive is sent to the SME of the MLD2, where the primitive includes the following parameters:
   PeerSTAAddress, an address used for indicating the peer device executing the TID-to-link matching negotiation, specifically an address of a device sending a TID-to-link Mapping request message in the embodiment of the disclosure, the address of the MLD1 or the address of the logical entity STA1 or STA2 belonging to the MLD1 being set in the embodiment of the disclosure.
2) After the MLME of the MLD2 receives the TID-to-link Mapping request message, if the parameter Default link mapping has a value of 1, the MLME-TID2LINKMAPPING.indication primitive is sent to the SME of the MLD2, where the primitive includes 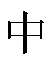 the following parameters:
   PeerSTAAddress, an address used for indicating the peer device executing TID-to-link matching negotiation, specifically an address of a device sending a TID-to-link Mapping request message in the embodiment of the disclosure, the address of the MLD1 or the address of the logical entity STA1 or STA2 belonging to the MLD1 being set in the embodiment of the disclosure.

Default link mapping used for indicating whether to use default configuration, where setting is carried out according to the type of the message or parameters of the message, for example, the TID-to-link Mapping request message in the embodiment of the disclosure instructs to terminate negotiation of traffic-to-link mapping configuration, and a parameter value is accordingly set as 1, indicating to use default configuration.

It is noted that the TID-to-link Mapping request message in manners 1) and 2) of S113 may be a TID-to-link Mapping termination notification message, such that after receiving the message, the MLME of the MLD2 sends the MLME-TID2LINKMAPPING TERMINATION.indication primitive or the MLME-TID2LINKMAPPING.indication primitive to the SME of the MLD2, where the parameter Default link mapping in the MLME-TID2LINKMAPPING.indication primitive may be set according to the type of the message.

S114, set, by the SME of the MLD2, TID-to-link mapping configuration as default configuration.

In some embodiments, the MLME-TID2LINKMAPPING.request primitive in S101, the MLME-TID2LINKMAPPING.indication primitive in S104, the MLME-TID2LINKMAPPING.response primitive in S105, and the MLME-TID2LINKMAPPING.confirm primitive in S108 may include the parameter Default link mapping.

The Default link mapping in the MLME-TID2LINKMAPPING.request primitive is set as an instruction not to use default configuration; the Default link mapping in the MLME-TID2LINKMAPPING.indication primitive is set according to the type of the TID-to-link Mapping request message or parameters in the message received by the MLME of the MLD2, the TID-to-link Mapping request message sent in S103 includes the parameter Default link mapping, such that the value of the parameter Default link mapping in the MLME-TID2LINKMAPPING.indication primitive in S104 is the same as the TID-to-link Mapping request message sent in S103; if the value of the parameter Status code in S105 is SUCCESS or Suggested, the value of the parameter Default link mapping in the MLME-TID2LINKMAPPING.response primitive is 0, indicating not to use default configuration, otherwise, the value of the parameter Default link mapping is set as 1 (indicating to use the default configuration) or the parameter is not included; and if the MLME of the MLD1 receives the TID-to-link Mapping response message, indicating acceptance of the request or suggestion, the value of the parameter Default link mapping in the MLME-TID2LINKMAPPING.confirm primitive in S108 is 0, indicating not to use the default configuration, and otherwise the value of the parameter Default link mapping is set as 1 (indicating to use the default configuration) or the parameter is not included.

In this embodiment, the TID-to-link mapping request message and the parameter Default link mapping in the TID-to-link mapping
response message may no longer be set according to the type of the primitive or the parameters of the primitive, but is directly the same as the corresponding primitive.

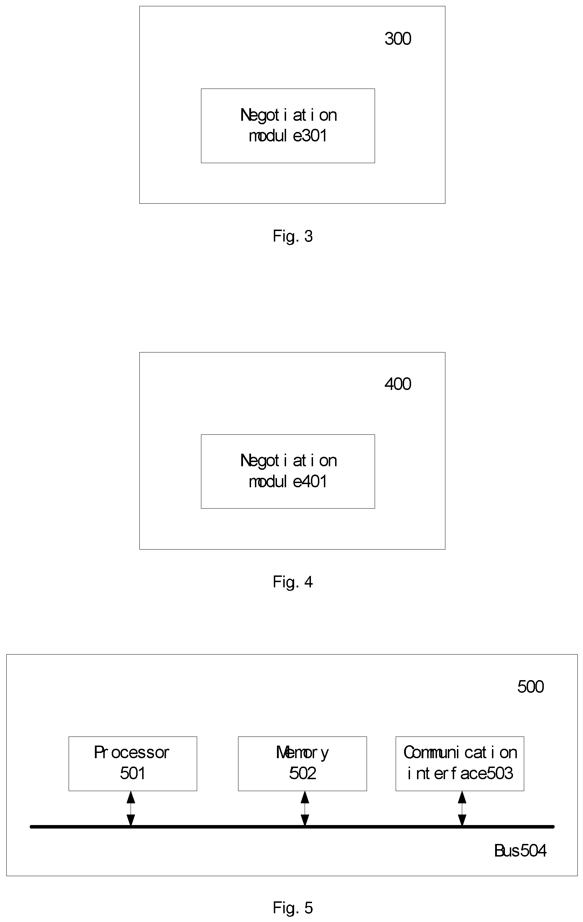

Fig. 3 is a structural schematic diagram of an apparatus for negotiating traffic-to-link mapping configuration provided in an embodiment of the disclosure. As shown in Fig. 3, the apparatus 300 includes a negotiation module 301, where the negotiation module 301 is used for executing;
send, by the higher-layer management entity, a first traffic-to-link mapping request primitive to the lower-layer management entity, where the first traffic-to-link mapping request primitive includes an address of a peer device, a negotiation session identifier and traffic-to-link mapping configuration information, and the peer device is a multi-link device;
send, by the lower-layer management entity, a first traffic-to-link mapping request message to the peer device, where the first traffic-to-link mapping request message includes a type of the message, a negotiation session identifier, traffic-to-link mapping configuration information and an instruction whether to use default configuration, and set the first traffic-to-link mapping request message according to the first traffic-to-link mapping request primitive;
receive, by the lower-layer management entity, a traffic-to-link mapping response message from the peer device, where the traffic-to-link mapping response message includes a type of the message, a negotiation session identifier and a processing status for a request; and
send, by the lower-layer management entity, a traffic-to-link mapping confirm primitive to the higher-layer management entity, where the traffic-to-link mapping confirm primitive includes an address of the peer device, a negotiation session identifier and a processing status for a request, and set the traffic-to-link mapping confirm primitive according to a received traffic-to-link mapping response message.

In an optional example, those skilled in the art may understand that the apparatus 300 may specifically be the MLD1 in the above embodiment, and that the apparatus 300 may be used for executing various flows and/or steps corresponding to the MLD1 in the above method, which is not described herein in order to avoid repetition.

Fig. 4 is a structural schematic diagram of another apparatus for negotiating traffic-to-link mapping configuration provided in an embodiment of the disclosure. As shown in Fig. 4, the apparatus 400 includes a negotiation module 401, where the negotiation module 401 is used for executing:
receive, by the lower-layer management entity, a first traffic-to-link mapping request message from a peer device, where the first traffic-to-link mapping request message includes a type of the message, a negotiation session identifier, traffic-to-link mapping configuration information, and an instruction whether to use default configuration, and the peer device is a multi-link device;
send, by the lower-layer management entity, a first traffic-to-link mapping indication primitive to the higher-layer management entity, where the first traffic-to-link mapping indication primitive includes an address of the peer device, a negotiation session identifier, and traffic-to-link mapping configuration information, and set the first traffic-to-link mapping indication primitive according to the first traffic-to-link mapping request message;
send, by the higher-layer management entity, a traffic-to-link mapping response primitive to the lower-layer management entity, where the traffic-to-link mapping response primitive includes an address of the peer device, a negotiation session identifier and a processing status for a request, and set the traffic-to-link mapping response primitive according to the first traffic-to-link mapping indication primitive; and
send, by the lower-layer management entity, a traffic-to-link mapping response message to the peer device, where the traffic-to-link mapping response message includes a type of the message, a negotiation session identifier and a processing status for a request, and set the traffic-to-link mapping response message according to the traffic-to-link mapping response primitive.

In an optional example, those skilled in the art may understand that the apparatus 400 may specifically be the MLD2 in the above embodiment, and that the apparatus 400 may be used for executing various flows and/or steps corresponding to the MLD2 in the above method, which is not described herein in order to avoid repetition.

It should be understood that the apparatus 300 and the apparatus 400 herein are instructed in the form of functional modules. The term "module" herein may refer to an application specific integrated circuit (ASIC), an electronic circuit, a processor (e.g., a shared processor, a proprietary processor, or a group processor, etc.) for executing one or more software or firmware programs, a memory , a merged logic circuit, and/or other appropriate components to support described functions. The apparatus 300 and the apparatus 400 above have functions to implement corresponding steps in the above method; and the above functions may be implemented by means of hardware or by executing corresponding software by means of hardware. The hardware or software includes one or more modules corresponding to the above functions. In an embodiment of the disclosure, the apparatus 300 and the apparatus 400 may be a chip or a system on chip, e.g. a system on chip (SoC), which is not limited herein in the disclosure.

An embodiment of the disclosure further provides a device for negotiating traffic-to-link mapping configuration. Fig. 5 is a structural schematic diagram of a device for negotiating traffic-to-link mapping configuration provided in an embodiment of the disclosure. As shown in Fig. 5, the device 500 includes a processor 501, a memory 502, and a communication interface 503, where the processor 501, the memory 502, and the communication interface 503 communicate with one another by means of a bus 504, and the memory 502 stores a command executable by the processor 501, and the command is loaded and executed by the processor 501 to control the communication interface 503 to send and/or receive a signal.

It should be understood that the device 500 may specifically be the MLD1 or the MLD2 in the above embodiments, or that the functions of the MLD1 or the MLD2 in the above embodiments may be integrated in the device 500, and the device 500 may be used for executing various steps and/or flows corresponding to the MLD1 or the MLD2 in the above embodiments. Optionally, the memory 502 may include a read-only memory and a random access memory and provide commands and data to the processor 501. Part of the memory 502 may further include a non-volatile random access memory. For example, the memory 502 may further store information of device types. The processor 501 may be used for executing the command stored in the memory 502, and when the processor 501 executes the command, the processor 501 may execute various steps and/or flows corresponding to the MLD1 or the MLD2 in the above method embodiments.

It should be understood that in the embodiment of the disclosure, the processor 501 may be a central processing unit (CPU), and the processor may further be other general-purpose processors, a digital signal processor (DSP), an application specific integrated circuit (ASIC), a field programmable gate array (FPGA) or other programmable logic device, a discrete gate or a transistor logic device, a discrete hardware assembly, etc. The general-purpose processor may be a microprocessor, or the processor may be any conventional processor, etc.

In an implementation process, each step of above method may be completed by means of an integrated logic circuit of hardware in processor, or
commands in the form of software. Steps of the method disclosed in the embodiments of the disclosure may be directly embodied as being completed by execution by the hardware processor, or by execution of combination of hardware and software modules in the processor. The software module may be located in mature storage media of a random access memory, a flash memory, a read-only memory, a programmable read-only memory, or an electrically erasable programmable memory, a register, etc. in the art. The storage media are located in the memory, and the processor executes the command in the memory and completes the steps of the above method in combination with hardware of the processor, which is not described herein in detail in order to avoid repetition.

The above embodiments may be implemented wholly or partially by means of software, hardware, firmware, or any other combination. When implemented in software, the above embodiments may be implemented wholly or partially in the form of a computer program product. The computer program product includes one or more computer commands or a computer program. The flows or functions according to the embodiment of the disclosure are generated wholly or partially when the computer commands or the computer program are loaded or executed on a computer. The computer may be a general-purpose computer, a special-purpose computer, a computer network, or other programmable apparatuses. The computer commands may be stored in a computer-readable storage medium or transmitted from one computer-readable storage medium to another computer-readable storage medium. For example, the computer commands may be transmitted from one website, computer, server, or data center by means of wire (e.g., infrared, wireless, microwave, etc.) manners to another website, computer, server, or data center. The computer-readable storage medium may be any available media that may be accessed by a computer or data storage devices of servers, data centers, etc. that include one or more sets of available media. The available media may be magnetic media (e.g., floppy disks, hard disks and magnetic tapes), optical media (e.g., digital video disks (DVDs)), or semiconductor media. The semiconductor media may be solid state disks.

It should be understood that in various embodiments of the disclosure, the size of sequence numbers of the above processes does not mean the order of execution, and the order of execution of the processes should be determined by functions and inherent logics of the processes, and should not constitute any limitation on the implementation process of the embodiments of the disclosure.

Those of ordinary skill in the art may be aware that modules of various examples
and algorithm steps described in the embodiments disclosed herein may be implemented in electronic hardware, or a combination of computer software and electronic hardware. Whether these functions are executed in hardware or software depends on particular application and design constraints of the technical solution. Those skilled in the art may use different methods to implement the described functions for each particular application, but such implementation should not be considered to be beyond the scope of the disclosure.

Those skilled in the pertinent field may clearly understand that for convenience and brevity of description, specific working processes of the above devices, apparatuses, and modules may refer to corresponding processes in the foregoing method embodiments, which is not described herein.

In the several embodiments provided in the disclosure, it should be understood that the devices, apparatuses and methods disclosed may be implemented in other ways. For example, the apparatus embodiments described above are merely schematic, for example, division of the modules is merely a kind of division of logic functions, there may be other division manners in actual implementation, and for example, a module or an assembly may be divided into a plurality of modules or assemblies, or the plurality of modules or assemblies may be combined or integrated into another system, or some features may be omitted or not executed. In another aspect, the coupling or direct coupling or communicative connection to one another shown or discussed may be by means of some interfaces, and the indirect coupling or communicative connection of apparatuses or modules may be in electrical, mechanical, or other form.

The units described as separated components may or may not be physically separated, and
the components displayed as units may or may not be physical units, that is, may be located in one place or distributed to multiple network units. Part or all of the units may be selected according to actual needs to achieve the objective of the solution of this embodiment. In addition, each functional unit in each embodiment of the disclosure may be integrated in one processing unit, or each unit may exist separately and physically, or two or more units may be integrated in one unit.

If the functions are implemented in the form of software functional units and sold or used as independent products, the functions may be stored in a computer readable storage medium. On the basis of such understanding, the technical solution of the disclosure may be embodied in the form of software products in essence or in part that contributes to the prior art or in part of the technical solution, the computer software products are stored in one storage medium, and include several commands to make one computer device (which may be a personal computer, a server, a network device, etc.) execute whole or partial steps of the method of each embodiment of the disclosure. The foregoing storage medium includes various media capable of storing program codes of a USB flash disk, a mobile hard disk, a read-only memory, a random access memory, a magnetic disk, an optical disk, etc.

What is described above is merely specific implementations of the disclosure, but the scope of protection of the disclosure is not limited thereto, and any changes or substitutions, that may readily occur to those skilled in the art, within the scope of technology disclosed in the disclosure all fall within the scope of protection of the disclosure. Therefore, the scope of protection of the disclosure should be subject to the scope of protection of the claims.

## Claims

1. A method for negotiating traffic-to-link mapping configuration, applied to a multi-link device, the multi-link device comprising a higher-layer management entity and a lower-layer management entity, wherein the higher management entity is a layer independent entity that resides in a separate management plane, wherein the method comprises:
sending, by the higher-layer management entity, a first traffic-to-link mapping request primitive to the lower-layer management entity, wherein the first traffic-to-link mapping request primitive comprises an address of a peer device, a negotiation session identifier and traffic-to-link mapping configuration information, and the peer device is a multi-link device;
sending, by the lower-layer management entity, a first traffic-to-link mapping request message to the peer device, wherein the first traffic-to-link mapping request message comprises a type of the message, a negotiation session identifier, traffic-to-link mapping configuration information and an instruction whether to use default configuration, and setting the first traffic-to-link mapping request message according to the first traffic-to-link mapping request primitive;
receiving, by the lower-layer management entity, a traffic-to-link mapping response message from the peer device, wherein the traffic-to-link mapping response message comprises a type of the message, a negotiation session identifier and a processing status for a request; and
sending, by the lower-layer management entity, a traffic-to-link mapping confirm primitive to the higher-layer management entity, wherein the traffic-to-link mapping confirm primitive comprises an address of the peer device, a negotiation session identifier and a processing status for a request, and setting the traffic-to-link mapping confirm primitive according to the traffic-to-link mapping response message;
wherein under a condition that the processing status for the request indicates acceptance of the request or suggestion, the traffic-to-link mapping response message and the traffic-to-link mapping confirm primitive each further comprise traffic-to-link mapping configuration information, and the traffic-to-link mapping response message further comprises an instruction whether to use default configuration.

2. The method for negotiating traffic-to-link mapping configuration as claimed in claim 1, wherein the sending, by the lower-layer management entity, the first traffic-to-link mapping request message to the peer device comprises:
sending the first traffic-to-link mapping request message to the peer device on any link, wherein the address of the peer device in the first traffic-to-link mapping request primitive is an address of the multi-link device;
alternatively, sending the first traffic-to-link mapping request message to the peer device on a link corresponding to the logical entity, wherein the address of the peer device in the first traffic-to-link mapping request primitive is an address of a logical entity belonging to the multi-link device.

3. The method for negotiating traffic-to-link mapping configuration as claimed in claim 1, further comprising:
carrying out, by the higher-layer management entity, traffic-to-link mapping configuration according to the traffic-to-link mapping confirm primitive under a condition that the processing status for the request in the traffic-to-link mapping confirm primitive indicates acceptance of the request; and
not changing, by the higher-layer management entity, current traffic-to-link mapping configuration or setting, by the higher-layer management entity, the current traffic-to-link mapping configuration as default configuration under a condition that the processing status for the request in the traffic-to-link mapping confirm primitive indicates refuse of the request.

4. The method for negotiating traffic-to-link mapping configuration as claimed in claim 1, further comprising: determining, by the higher-layer management entity,
whether to accept suggested configuration parameters according to self-traffic conditions, or self-capability, or operation limitation under the condition that the processing status for request in the traffic-to-link mapping confirm primitive indicates suggestion, carrying out traffic-to-link mapping configuration according to suggested parameters under the condition that the suggested configuration parameters are accepted, and not changing current traffic-to-link mapping configuration or setting the current traffic-to-link mapping configuration as default configuration under the condition that the suggested configuration parameters are not accepted.

5. The method for negotiating traffic-to-link mapping configuration as claimed in claim 1, further comprising: sending, by the higher-layer management entity, a traffic-to-link mapping termination request primitive or a second traffic-to-link mapping request primitive to the lower-layer management entity,
so as to instruct the lower-layer management entity to send a traffic-to-link mapping termination message or a second traffic-to-link mapping request message to ask the peer device to terminate use of current traffic-to-link mapping configuration; and
sending, by the lower-layer management entity, the second traffic-to-link mapping request message or the traffic-to-link mapping termination message to the peer device, so as to instruct the peer device to terminate use of the current traffic-to-link mapping configuration, and setting the second traffic-to-link mapping request message or the traffic-to-link mapping termination message according to the traffic-to-link mapping termination request primitive or the second traffic-to-link mapping request primitive.

6. The method for negotiating traffic-to-link mapping configuration as claimed in claim 5, wherein the traffic-to-link mapping termination request primitive comprises an address of the peer device; the second traffic-to-link mapping request primitive comprises an address of the peer device and an instruction to use default configuration; and the second traffic-to-link mapping request message comprises a type of the message and an instruction whether to use default configuration.

7. The method for negotiating traffic-to-link mapping configuration as claimed in claim 5, wherein the sending, by the lower-layer management entity, the second traffic-to-link mapping request message or the traffic-to-link mapping termination message to the peer device comprises:
with an address of the peer device in the traffic-to-link mapping termination request primitive or the second traffic-to-link mapping request primitive being an address of a multi-link device, sending the second traffic-to-link mapping request message or the traffic-to-link mapping termination message to the peer device on any link;
alternatively, sending the second traffic-to-link mapping request message or the traffic-to-link mapping termination message to the peer device on a link corresponding to the logical entity, wherein the address of the peer device in the traffic-to-link mapping termination request primitive or the second traffic-to-link mapping request primitive is an address of a logical entity belonging to the multi-link device.

8. The method for negotiating traffic-to-link mapping configuration as claimed in claim 1, wherein the setting the first traffic-to-link mapping request message according to the first traffic-to-link mapping request primitive comprises:
setting the instruction whether to use default configuration in the first traffic-to-link mapping request message as an instruction not to use default configuration according to a type of the first traffic-to-link mapping request primitive or the traffic-to-link mapping configuration information comprised in the first traffic-to-link mapping request primitive.

9. The method for negotiating traffic-to-link mapping configuration as claimed in claim 6, wherein the setting the second traffic-to-link mapping request message according to the traffic-to-link mapping termination request primitive or the second traffic-to-link mapping request primitive comprises:
setting an instruction whether to use default configuration in the second traffic-to-link mapping request message as an instruction to use default configuration according to a type of the traffic-to-link mapping termination request primitive or the second traffic-to-link mapping request primitive, or according to an instruction whether to use default configuration in the second traffic-to-link mapping request primitive.

10. The method for negotiating traffic-to-link mapping configuration as claimed in claim 1, wherein the first traffic-to-link mapping request primitive further comprises an instruction not to use default configuration, and the traffic-to-link mapping confirm primitive further comprises an instruction whether to use default configuration.

11. The method for negotiating traffic-to-link mapping configuration as claimed in claim 1, wherein the traffic-to-link mapping configuration information comprises a first parameter, a second parameter, and one or more third parameters, the first parameter being used for indicating that traffics match links for uplink, or downlink, or uplink and downlink, the second parameter being used for indicating which traffics are to be configured, and the third parameter being used for indicating links matching traffics which are to be configured as indicated by the second parameter.

12. A method for negotiating traffic-to-link mapping configuration, applied to a multi-link device, the multi-link device comprising a higher-layer management entity and a lower-layer management entity, wherein the higher management entity is a layer independent entity that resides in a separate management plane, wherein the method comprises:
receiving, by the lower-layer management entity, a first traffic-to-link mapping request message from a peer device, wherein the first traffic-to-link mapping request message comprises a type of the message, a negotiation session identifier, traffic-to-link mapping configuration information, and an instruction whether to use default configuration, and the peer device is a multi-link device;
sending, by the lower-layer management entity, a first traffic-to-link mapping indication primitive to the higher-layer management entity, wherein the first traffic-to-link mapping indication primitive comprises an address of the peer device, a negotiation session identifier and traffic-to-link mapping configuration information, and setting the first traffic-to-link mapping indication primitive according to the first traffic-to-link mapping request message;
sending, by the higher-layer management entity, a traffic-to-link mapping response primitive to the lower-layer management entity, wherein the traffic-to-link mapping response primitive comprises an address of the peer device, a negotiation session identifier and a processing status for a request, and setting the traffic-to-link mapping response primitive according to the first traffic-to-link mapping indication primitive; and
sending, by the lower-layer management entity, a traffic-to-link mapping response message to the peer device, wherein the traffic-to-link mapping response message comprises a type of the message, a negotiation session identifier and a processing status for a request, and setting the traffic-to-link mapping response message according to the traffic-to-link mapping response primitive;
wherein under a condition that the processing status for the request indicates acceptance of the request or suggestion, the traffic-to-link mapping response message and the traffic-to-link mapping confirm primitive each further comprise traffic-to-link mapping configuration information, and the traffic-to-link mapping response message further comprises an instruction whether to use default configuration.

13. A device for negotiating traffic-to-link mapping configuration, comprising a processor and a memory, wherein the memory stores a command executable by the processor, and the command is loaded and executed by the processor to implement the method for negotiating traffic-to-link mapping configuration of any one of claims 1-11.

## Patentansprüche

1. Verfahren zur Aushandlung der Konfiguration von Traffic-to-Link-Mapping, das auf eine Multi-Link-Vorrichtung angewendet wird, wobei die Multi-Link-Vorrichtung eine höherschichtige Verwaltungsentität und eine niedrigerschichtige Verwaltungsentität umfasst, wobei die höhere Verwaltungsentität eine schichtunabhängige Entität ist, die sich in einer separaten Verwaltungsebene befindet, wobei das Verfahren Folgendes umfasst:
Senden, durch die höherschichtige Verwaltungsentität, einer ersten Traffic-to-Link-Mapping-Anforderungsprimitive an die niedrigerschichtige Verwaltungsentität, wobei die erste Traffic-to-Link-Mapping-Anforderungsprimitive eine Adresse einer Peer-Vorrichtung, eine Aushandlungssitzungskennung und Traffic-to-Link-Mapping-Konfigurationsinformationen umfasst und die Peer-Vorrichtung eine Multi-Link-Vorrichtung ist;
Senden, durch die niedrigerschichtige Verwaltungsentität, einer ersten Traffic-to-Link-Mapping-Anforderungsnachricht an die Peer-Vorrichtung, wobei die erste Traffic-to-Link-Mapping-Anforderungsnachricht einen Typ der Nachricht, eine Aushandlungssitzungskennung, Traffic-to-Link-Mapping-Konfigurationsinformationen und eine Anweisung umfasst, ob die Standardkonfiguration verwendet werden soll, und Einstellen der ersten Traffic-to-Link-Mapping-Anforderungsnachricht gemäß der ersten Traffic-to-Link-Mapping-Anforderungsprimitive;
Empfangen, durch die niedrigerschichtige Verwaltungsentität, einer Traffic-to-Link-Mapping-Antwortnachricht von der Peer-Vorrichtung, wobei die Traffic-to-Link-Mapping-Antwortnachricht einen Typ der Nachricht, eine Aushandlungssitzungskennung und einen Verarbeitungsstatus für eine Anforderung umfasst; und
Senden, durch die niedrigerschichtige Verwaltungsentität, einer Traffic-to-Link-Mapping-Bestätigungsprimitive an die höherschichtige Verwaltungsentität, wobei die Traffic-to-Link-Mapping-Bestätigungsprimitive eine Adresse der Peer-Vorrichtung, eine Aushandlungssitzungskennung und einen Verarbeitungsstatus für eine Anforderung umfasst, und Einstellen der Traffic-to-Link-Mapping-Bestätigungsprimitive gemäß der Traffic- to-Link-Mapping-Antwortnachricht;
wobei unter einer Bedingung, dass der Verarbeitungsstatus für die Anforderung die Annahme der Anforderung oder des Vorschlags anzeigt, die Traffic-to-Link-Mapping-Antwortnachricht und die Traffic-to-Link-Mapping-Bestätigungsprimitive jeweils ferner Traffic-to-Link-Mapping-Konfigurationsinformationen umfassen und die Traffic-to-Link-Mapping-Antwortnachricht ferner eine Anweisung umfasst, ob eine Standardkonfiguration verwendet werden soll.

2. Verfahren zur Aushandlung der Konfiguration von Traffic-to-Link-Mapping nach Anspruch 1, wobei das Senden, durch die niedrigerschichtige Verwaltungsentität, der ersten Traffic-to-Link-Mapping-Anforderungsnachricht an die Peer-Vorrichtung Folgendes umfasst:
Senden der ersten Traffic-to-Link-Mapping-Anforderungsnachricht an die Peer-Vorrichtung auf einem beliebigen Link, wobei die Adresse der Peer-Vorrichtung in der ersten Traffic-to-Link-Mapping-Anforderungsprimitive eine Adresse der Multi-Link-Vorrichtung ist;
alternativ Senden der ersten Traffic-to-Link-Mapping-Anforderungsnachricht an die Peer-Vorrichtung auf einem Link, der der logischen Entität entspricht, wobei die Adresse der Peer-Vorrichtung in der ersten Traffic-to-Link-Mapping-Anforderungsprimitive eine Adresse einer logischen Entität ist, die zu der Multi-Link-Vorrichtung gehört.

3. Verfahren zur Aushandlung der Konfiguration von Traffic-to-Link-Mapping nach Anspruch 1, ferner umfassend:
Ausführen, durch die höherschichtige Verwaltungsentität, der Traffic-to-Link-Mapping-Konfiguration gemäß der Traffic-to-Link-Mapping-Bestätigungsprimitive unter einer Bedingung, dass der Verarbeitungsstatus für die Anforderung in der Traffic-to-Link-Mapping-Bestätigungsprimitive die Annahme der Anforderung anzeigt; und
Nichtverändern, durch die höherschichtige Verwaltungsentität, der aktuellen Traffic-to-Link-Mapping-Konfiguration oder Einstellen, durch die höherschichtige Verwaltungsentität, der aktuellen Traffic-to-Link-Mapping-Konfiguration als Standardkonfiguration unter einer Bedingung, dass der Verarbeitungsstatus für die Anforderung in der Traffic-to-Link-Mapping-Bestätigungsprimitive die Ablehnung der Anforderung anzeigt.

4. Verfahren zur Aushandlung der Konfiguration von Traffic-to-Link-Mapping nach Anspruch 1, ferner umfassend: Bestimmen, durch die höherschichtige Verwaltungsentität,
ob vorgeschlagene Konfigurationsparameter gemäß Selbst-Traffic-Bedingungen oder Selbstfähigkeit oder Betriebsbeschränkung akzeptiert werden sollen, unter der Bedingung, dass der Verarbeitungsstatus für die Anforderung in der Traffic-to-Link-Mapping-Bestätigungsprimitive einen Vorschlag anzeigt, Ausführen der Traffic-to-Link-Mapping-Konfiguration gemäß vorgeschlagenen Parametern unter der Bedingung, dass die vorgeschlagenen Konfigurationsparameter akzeptiert werden, und Nichtverändern der aktuellen Traffic-to-Link-Mapping-Konfiguration oder Einstellen der aktuellen Traffic-to-Link-Mapping-Konfiguration als Standardkonfiguration unter der Bedingung, dass die vorgeschlagenen Konfigurationsparameter nicht akzeptiert werden.

5. Verfahren zur Aushandlung der Konfiguration von Traffic-to-Link-Mapping nach Anspruch 1, ferner umfassend: Senden, durch die höherschichtige Verwaltungsentität, einer Traffic-to-Link-Mapping-Beendigungsanforderungsprimitive oder einer zweiten Traffic-to-Link-Mapping-Anforderungsprimitive an die niedrigerschichtige Verwaltungsentität,
um die niedrigerschichtige Verwaltungseinheit anzuweisen, eine Traffic-to-Link-Mapping-Beendigungsnachricht oder eine zweite Traffic-to-Link-Mapping-Anforderungsnachricht zu senden, um die Peer-Vorrichtung darum zu bitten, die Verwendung der aktuellen Traffic-to-Link-Mapping-Konfiguration zu beenden; und
Senden, durch die niedrigerschichtige Verwaltungsentität, der zweiten Traffic-to-Link-Mapping-Anforderungsnachricht oder der Traffic-to-Link-Mapping-Beendigungsnachricht an die Peer-Vorrichtung, um die Peer-Vorrichtung anzuweisen, die Verwendung der aktuellen Traffic-to-Link-Mapping-Konfiguration zu beenden, und Einstellen der zweiten Traffic-to-Link-Mapping-Anforderungsnachricht oder der Traffic-to-Link-Mapping-Beendigungsnachricht gemäß der Traffic-to-Link-Mapping-Beendigungsanforderungsprimitive oder der zweiten Traffic-to-Link-Mapping-Anforderungsprimitive.

6. Verfahren zur Aushandlung der Konfiguration von Traffic-to-Link-Mapping nach Anspruch 5, wobei die Traffic-to-Link-Mapping-Beendigungsanforderungsprimitive eine Adresse der Peer-Vorrichtung umfasst; die zweite Traffic-to-Link-Mapping-Anforderungsprimitive eine Adresse der Peer-Vorrichtung und eine Anweisung zum Verwenden einer Standardkonfiguration umfasst; und die zweite Traffic-to-Link-Mapping-Anforderungsnachricht einen Typ der Nachricht und eine Anweisung, ob eine Standardkonfiguration verwendet werden soll, umfasst.

7. Verfahren zur Aushandlung der Konfiguration von Traffic-to-Link-Mapping nach Anspruch 5, wobei das Senden, durch die niedrigerschichtige Verwaltungsentität, der zweiten Traffic-to-Link-Mapping-Anforderungsnachricht oder der Traffic-to-Link-Mapping-Beendigungsnachricht an die Peer-Vorrichtung Folgendes umfasst:
wenn eine Adresse der Peer-Vorrichtung in der Traffic-to-Link-Mapping-Beendigungsanforderungsprimitive oder der zweiten Traffic-to-Link-Mapping-Anforderungsprimitive eine Adresse einer Multi-Link-Vorrichtung ist, Senden der zweiten Traffic-to-Link-Mapping-Anforderungsnachricht oder der Traffic-to-Link-Mapping-Beendigungsnachricht an die Peer-Vorrichtung auf einem beliebigen Link;
alternativ Senden der zweiten Traffic-to-Link-Mapping-Anforderungsnachricht oder der Traffic-to-Link-Mapping-Beendigungsnachricht an die Peer-Vorrichtung auf einem Link, der der logischen Entität entspricht, wobei die Adresse der Peer-Vorrichtung in der Traffic-to-Link-Mapping-Beendigungsanforderungsprimitive oder der zweiten Traffic-to-Link-Mapping-Anforderungsprimitive eine Adresse einer logischen Entität ist, die zu der Multi-Link-Vorrichtung gehört.

8. Verfahren zur Aushandlung der Konfiguration von Traffic-to-Link-Mapping nach Anspruch 1, wobei das Einstellen der ersten Traffic-to-Link-Mapping-Anforderungsnachricht gemäß der ersten Traffic-to-Link-Mapping-Anforderungsprimitive Folgendes umfasst:
Einstellen der Anweisung, ob die Standardkonfiguration in der ersten Traffic-to-Link-Mapping-Anforderungsnachricht verwendet werden soll, als eine Anweisung, keine Standardkonfiguration gemäß einem Typ der ersten Traffic-to-Link-Mapping-Anforderungsprimitive oder der Traffic-to-Link-Mapping-Konfigurationsinformationen, die in der ersten Traffic-to-Link-Mapping-Anforderungsprimitive enthalten sind, zu verwenden.

9. Verfahren zur Aushandlung der Konfiguration von Traffic-to-Link-Mapping nach Anspruch 6, wobei das Einstellen der zweiten Traffic-to-Link-Mapping-Anforderungsnachricht gemäß der Traffic-to-Link-Mapping-Beendigungsanforderungsprimitive oder der zweiten Traffic-to-Link-Mapping-Anforderungsprimitive umfasst:
Einstellen einer Anweisung, ob die Standardkonfiguration in der zweiten Traffic-to-Link-Mapping-Anforderungsnachricht verwendet werden soll, als eine Anweisung, die Standardkonfiguration gemäß einem Typ der Traffic-to-Link-Mapping-Beendigungsanforderungsprimitive oder der zweiten Traffic-to-Link-Mapping-Anforderungsprimitive zu verwenden, oder gemäß einer Anweisung, ob die Standardkonfiguration in der zweiten Traffic-to-Link-Mapping-Anforderungsprimitive verwendet werden soll.

10. Verfahren zur Aushandlung der Konfiguration von Traffic-to-Link-Mapping nach Anspruch 1, wobei die erste Traffic-to-Link-Mapping-Anforderungsprimitive ferner eine Anweisung umfasst, keine Standardkonfiguration zu verwenden, und die Traffic-to-Link-Mapping-Bestätigungsprimitive ferner eine Anweisung umfasst, ob eine Standardkonfiguration verwendet werden soll.

11. Verfahren zur Aushandlung der Konfiguration von Traffic-to-Link-Mapping nach Anspruch 1, wobei die Traffic-to-Link-Mapping-Konfigurationsinformationen einen ersten Parameter, einen zweiten Parameter und einen oder mehrere dritte Parameter umfassen, wobei der erste Parameter verwendet wird, um anzuzeigen, dass Traffics mit Links für Uplink oder Downlink oder Uplink und Downlink übereinstimmen, wobei der zweite Parameter verwendet wird, um anzuzeigen, welche Traffics konfiguriert werden sollen, und wobei der dritte Parameter verwendet werden, um Links anzuzeigen, die mit Traffics übereinstimmen, die wie durch den zweiten Parameter angezeigt konfiguriert werden sollen.

12. Verfahren zur Aushandlung der Konfiguration von Traffic-to-Link-Mapping, das auf eine Multi-Link-Vorrichtung angewendet wird, wobei die Multi-Link-Vorrichtung eine höherschichtige Verwaltungsentität und eine niedrigerschichtige Verwaltungsentität umfasst, wobei die höhere Verwaltungsentität eine schichtunabhängige Entität ist, die sich in einer separaten Verwaltungsebene befindet, wobei das Verfahren Folgendes umfasst:
Empfangen, durch die niedrigerschichtige Verwaltungsentität, einer ersten Traffic-to-Link-Mapping-Anforderungsnachricht von einer Peer-Vorrichtung, wobei die erste Traffic-to-Link-Mapping-Anforderungsnachricht einen Typ der Nachricht, eine Aushandlungssitzungskennung, Traffic-to-Link-Mapping-Konfigurationsinformationen und eine Anweisung umfasst, ob die Standardkonfiguration verwendet werden soll, und die Peer-Vorrichtung eine Multi-Link-Vorrichtung ist;
Senden, durch die niedrigerschichtige Verwaltungsentität, einer ersten Traffic-to-Link-Mapping-Anzeigeprimitive an die höherschichtige Verwaltungsentität, wobei die erste Traffic-to-Link-Mapping-Anzeigeprimitive eine Adresse der Peer-Vorrichtung, eine Aushandlungssitzungskennung und Traffic-to-Link-Mapping-Konfigurationsinformationen umfasst, und Einstellen der ersten Traffic-to-Link-Mapping-Anzeigeprimitive gemäß der ersten Traffic-to-Link-Mapping-Anforderungsnachricht;
Senden, durch die höherschichtige Verwaltungsentität, einer Traffic-to-Link-Mapping-Antwortprimitive an die niedrigerschichtige Verwaltungsentität, wobei die Traffic-to-Link-Mapping-Antwortprimitive eine Adresse der Peer-Vorrichtung, eine Aushandlungssitzungskennung und einen Verarbeitungsstatus für eine Anforderung umfasst, und Einstellen der Traffic-to-Link-Mapping-Antwortprimitive gemäß der ersten Traffic-to-Link-Mapping-Anzeigeprimitive; und
Senden, durch die niedrigerschichtige Verwaltungsentität, einer Traffic-to-Link-Mapping-Antwortnachricht an die Peer-Vorrichtung, wobei die Traffic-to-Link-Mapping-Antwortnachricht einen Typ der Nachricht, eine Aushandlungssitzungskennung und einen Verarbeitungsstatus für eine Anforderung umfasst, und Einstellen der Traffic-to-Link-Mapping-Antwortnachricht gemäß der Traffic-to-Link-Mapping-Antwortprimitive;
wobei unter einer Bedingung, dass der Verarbeitungsstatus für die Anforderung die Annahme der Anforderung oder des Vorschlags anzeigt, die Traffic-to-Link-Mapping-Antwortnachricht und die Traffic-to-Link-Mapping-Bestätigungsprimitive jeweils ferner Traffic-to-Link-Mapping-Konfigurationsinformationen umfassen und die Traffic-to-Link-Mapping-Antwortnachricht ferner eine Anweisung umfasst, ob eine Standardkonfiguration verwendet werden soll.

13. Vorrichtung zur Aushandlung der Konfiguration von Traffic-to-Link-Mapping, umfassend einen Prozessor und einen Speicher, wobei der Speicher einen durch den Prozessor ausführbaren Befehl speichert und der Befehl durch den Prozessor geladen und ausgeführt wird, um das Verfahren zur Aushandlung der Konfiguration von Traffic-to-Link-Mapping nach einem der Ansprüche 1-11 zu implementieren.

## Revendications

1. Procédé de négociation d'une configuration de mappage trafic-liaison, appliqué à un dispositif à liaisons multiples, le dispositif à liaisons multiples comprenant une entité de gestion de couche supérieure et une entité de gestion de couche inférieure, dans lequel l'entité de gestion de couche supérieure est une entité indépendante de la couche qui réside dans un plan de gestion distinct, dans lequel le procédé comprend :
l'envoi, par l'entité de gestion de couche supérieure, d'une première primitive de demande de mappage trafic-liaison à l'entité de gestion de couche inférieure, dans lequel la première primitive de demande de mappage trafic-liaison comprend une adresse d'un dispositif homologue, un identifiant de session de négociation et des informations de configuration de mappage trafic-liaison, et le dispositif homologue est un dispositif à liaisons multiples ;
l'envoi, par l'entité de gestion de couche inférieure, d'un premier message de demande de mappage trafic-liaison au dispositif homologue, dans lequel le premier message de demande de mappage trafic-liaison comprend un type du message, un identifiant de session de négociation, des informations de configuration du mappage trafic-liaison et une instruction indiquant s'il faut utiliser la configuration par défaut, et la définition du premier message de demande de mappage trafic-liaison selon la première primitive de demande de mappage trafic-liaison ;
la réception, par l'entité de gestion de couche inférieure, d'un message de réponse de mappage trafic-liaison provenant du dispositif homologue, dans lequel le message de réponse de mappage trafic-liaison comprend un type du message, un identifiant de session de négociation et un état de traitement pour une demande ; et
l'envoi, par l'entité de gestion de couche inférieure, d'une primitive de confirmation de mappage trafic-liaison à l'entité de gestion de couche supérieure, dans lequel la primitive de confirmation de mappage trafic-liaison comprend une adresse du dispositif homologue, un identifiant de session de négociation et un état de traitement pour une demande, et la définition de la primitive de confirmation de mappage trafic-liaison selon le message de réponse de mappage trafic-liaison ;
dans lequel, à condition que l'état de traitement de la demande indique l'acceptation de la demande ou de la suggestion, le message de réponse de mappage trafic-liaison et la primitive de confirmation de mappage trafic-liaison comprennent chacun en outre des informations de configuration de mappage trafic-liaison, et le message de réponse de mappage trafic-liaison comprend en outre une instruction indiquant s'il faut utiliser la configuration par défaut.

2. Procédé de négociation de la configuration de mappage trafic-liaison selon la revendication 1, dans lequel l'envoi, par l'entité de gestion de couche inférieure, du premier message de demande de mappage trafic-liaison au dispositif homologue comprend :
l'envoi du premier message de demande de mappage trafic-liaison au dispositif homologue sur n'importe quelle liaison, dans lequel l'adresse du dispositif homologue dans la première primitive de demande de mappage trafic-liaison est une adresse du dispositif à liaisons multiples ;
en variante, l'envoi du premier message de demande de mappage trafic-liaison au dispositif homologue sur une liaison correspondant à l'entité logique, dans lequel l'adresse du dispositif homologue dans la première primitive de demande de mappage trafic-liaison est une adresse d'une entité logique appartenant au dispositif à liaisons multiples.

3. Procédé de négociation de la configuration de mappage trafic-liaison selon la revendication 1, comprenant en outre :
la mise en œuvre, par l'entité de gestion de couche supérieure, de la configuration de mappage trafic-liaison conformément à la primitive de confirmation de mappage trafic-liaison, à condition que l'état de traitement pour la demande dans la primitive de confirmation de mappage trafic-liaison indique l'acceptation de la demande ; et
la non-modification, par l'entité de gestion de couche supérieure, de la configuration de mappage trafic-liaison actuelle ou la définition, par l'entité de gestion de couche supérieure, de la configuration actuelle de mappage trafic-liaison comme configuration par défaut, à condition que l'état de traitement pour la demande contenue dans la primitive de confirmation de mappage trafic-liaison indique un refus de la demande.

4. Procédé de négociation de la configuration de mappage trafic-liaison selon la revendication 1, comprenant en outre : la détermination, par l'entité de gestion de couche supérieure,
s'il faut d'accepter des paramètres de configuration suggérés en fonction de conditions de trafic propres ou d'une capacité propre, ou d'une limitation de fonctionnement, à condition que l'état de traitement pour la demande dans la primitive de confirmation de mappage trafic-liaison indique une suggestion, la mise en œuvre de la configuration du mappage trafic-liaison selon des paramètres suggérés, à condition que les paramètres de configuration suggérés soient acceptés, et le non-modification de la configuration de mappage trafic-liaison actuelle ou la définition de la configuration de mappage trafic-liaison comme configuration par défaut, à condition que les paramètres de configuration suggérés ne soient pas acceptés.

5. Procédé de négociation de la configuration de mappage trafic-liaison selon la revendication 1, comprenant en outre : l'envoi, par l'entité de gestion de couche supérieure, d'une primitive de demande de terminaison de mappage trafic-liaison ou d'une deuxième primitive de demande de mappage trafic-liaison à l'entité de gestion de couche inférieure,
afin de donner instruction à l'entité de gestion de couche inférieure d'envoyer un message de terminaison de mappage trafic-liaison ou un deuxième message de demande de mappage trafic-liaison pour demander au dispositif homologue de mettre fin à l'utilisation de la configuration de mappage trafic-liaison actuelle ; et
l'envoi, par l'entité de gestion de couche inférieure, du deuxième message de demande de mappage trafic-liaison ou le message de terminaison de mappage trafic-liaison au dispositif homologue, de manière à donner instruction au dispositif homologue de mettre fin à l'utilisation de la configuration de mappage trafic-liaison actuelle, et la définition du deuxième message de demande de mappage trafic-liaison ou du message de terminaison de mappage trafic-liaison conformément à la primitive de demande de terminaison de mappage trafic-liaison ou à la deuxième primitive de demande de mappage trafic-liaison.

6. Procédé de négociation de la configuration de mappage trafic-liaison selon la revendication 5, dans lequel la primitive de demande de terminaison du mappage trafic-liaison comprend une adresse du dispositif homologue ; la deuxième primitive de demande de mappage trafic-liaison comprend une adresse du dispositif homologue et une instruction d'utiliser la configuration par défaut ; et le deuxième message de demande de mappage trafic-liaison comprend un type du message et une instruction indiquant s'il faut utiliser la configuration par défaut.

7. Procédé de négociation de la configuration de mappage trafic-liaison selon la revendication 5, dans lequel l'envoi, par l'entité de gestion de couche inférieure, du deuxième message de demande de mappage trafic-liaison ou du message de terminaison de mappage trafic-liaison au dispositif homologue comprend :
lorsqu'une adresse du dispositif homologue dans la primitive de demande de terminaison de mappage trafic-liaison ou dans la deuxième primitive de demande de mappage trafic-liaison est une adresse d'un dispositif à liaisons multiples, l'envoi du deuxième message de demande de mappage trafic-liaison ou du message de terminaison de mappage trafic-liaison au dispositif homologue sur n'importe quelle liaison ;
en variante, l'envoi du deuxième message de demande de mappage trafic-liaison ou du message de terminaison de mappage trafic-liaison au dispositif homologue sur une liaison correspondant à l'entité logique, dans lequel l'adresse du dispositif homologue dans la primitive de demande de terminaison de mappage trafic-liaison ou dans la deuxième primitive de demande de mappage trafic-liaison est une adresse d'une entité logique appartenant au dispositif à liaisons multiples.

8. Procédé de négociation de la configuration de mappage trafic-liaison selon la revendication 1, dans lequel la définition du premier message de demande de mappage trafic-liaison selon la première primitive de demande de mappage trafic-liaison comprend :
la définition de l'instruction indiquant s'il faut utiliser la configuration par défaut dans le premier message de demande de mappage trafic-liaison comme une instruction de ne pas utiliser la configuration par défaut selon un type de la première primitive de demande de mappage trafic-liaison ou les informations de configuration de mappage trafic-liaison comprises dans la première primitive de demande de mappage trafic-liaison.

9. Procédé de négociation de la configuration de mappage trafic-liaison selon la revendication 6, dans lequel la définition du deuxième message de demande de mappage trafic-liaison selon la primitive de demande de terminaison de mappage trafic-liaison ou la deuxième primitive de demande de mappage trafic-liaison comprend :
la définition d'une instruction indiquant s'il faut utiliser la configuration par défaut dans le deuxième message de demande de mappage trafic-liaison comme une instruction d'utiliser la configuration par défaut selon un type de la primitive de demande de terminaison de mappage trafic-liaison ou de la deuxième primitive de demande de mappage trafic-liaison, ou selon une instruction indiquant s'il faut d'utiliser la configuration par défaut dans la deuxième primitive de demande de mappage trafic-liaison.

10. Procédé de négociation de la configuration de mappage trafic-liaison selon la revendication 1, dans lequel la première primitive de demande de mappage trafic-liaison comprend en outre une instruction de ne pas utiliser la configuration par défaut, et la primitive de confirmation de mappage trafic-liaison comprend en outre une instruction indiquant s'il faut utiliser la configuration par défaut.

11. Procédé de négociation de la configuration de mappage trafic-liaison selon la revendication 1, dans lequel les informations de configuration de mappage trafic-liaison comprennent un premier paramètre, un deuxième paramètre et un ou plusieurs troisièmes paramètres, le premier paramètre étant utilisé pour indiquer que des trafics correspondent à des liaisons pour la liaison montante, ou la liaison descendante, ou la liaison montante et la liaison descendante, le deuxième paramètre étant utilisé pour indiquer quels trafics doivent être configurés, et le troisième paramètre étant utilisé pour indiquer des liaisons correspondant à des trafics qui doivent être configurés comme indiqué par le deuxième paramètre.

12. Procédé de négociation d'une configuration de mappage trafic-liaison, appliqué à un dispositif à liaisons multiples, le dispositif à liaisons multiples comprenant une entité de gestion de couche supérieure et une entité de gestion de couche inférieure, dans lequel l'entité de gestion de couche supérieure est une entité indépendante de couche qui réside dans un plan de gestion distinct, dans lequel le procédé comprend :
la réception, par l'entité de gestion de couche inférieure, d'un premier message de demande de mappage trafic-liaison provenant d'un dispositif homologue, dans lequel le premier message de demande de mappage trafic-liaison comprend un type du message, un identifiant de session de négociation, des informations de configuration de mappage trafic-liaison et une instruction indiquant s'il faut utiliser la configuration par défaut, et le dispositif homologue est un dispositif à liaisons multiples ;
l'envoi, par l'entité de gestion de couche inférieure, d'une première primitive d'indication de mappage trafic-liaison à l'entité de gestion de couche supérieure, dans lequel la première primitive d'indication de mappage trafic-liaison comprend une adresse du dispositif homologue, un identifiant de session de négociation et des informations de configuration de mappage trafic-liaison, et la définition de la première primitive d'indication de mappage trafic-liaison selon le premier message de demande de mappage trafic-liaison ;
l'envoi, par l'entité de gestion de couche supérieure, d'une primitive de réponse de mappage trafic-liaison à l'entité de gestion de couche inférieure, dans lequel la primitive de réponse de mappage trafic-liaison comprend une adresse du dispositif homologue, un identifiant de session de négociation et un état de traitement pour une demande, et la définition de la primitive de réponse de mappage trafic-liaison selon la première primitive d'indication de mappage trafic-liaison ; et
l'envoi, par l'entité de gestion de couche inférieure, d'un message de réponse de mappage trafic-liaison au dispositif homologue, dans lequel le message de réponse de mappage trafic-liaison comprend un type du message, un identifiant de session de négociation et un état de traitement pour une demande, et la définition du message de réponse de mappage trafic-liaison selon la primitive de réponse de mappage trafic-liaison ;
dans lequel, à condition que l'état de traitement de la demande indique l'acceptation de la demande ou de la suggestion, le message de réponse de mappage trafic-liaison et la primitive de confirmation de mappage trafic-liaison comprennent chacun en outre des informations de configuration de mappage trafic-liaison, et le message de réponse de mappage trafic-liaison comprend en outre une instruction indiquant s'il faut utiliser la configuration par défaut.

13. Dispositif pour la négociation d'une configuration de mappage trafic-liaison, comprenant un processeur et une mémoire, dans lequel la mémoire stocke une commande exécutable par le processeur, et la commande est chargée et exécutée par le processeur pour mettre en œuvre le procédé de négociation de la configuration de mappage trafic-liaison selon l'une quelconque des revendications 1 à 11.
